(19) Europäisches Patentamt
European Patent Office
Office européen des brevets

(11) EP 2 799 464 B1

(12) **EUROPEAN PATENT SPECIFICATION**

(45) Date of publication and mention of the grant of the patent:
**11.11.2020 Bulletin 2020/46**

(21) Application number: **12861519.2**

(22) Date of filing: **27.12.2012**

(51) Int Cl.:
***C08G 64/30*** *(2006.01)* ***C08G 64/16*** *(2006.01)*

(86) International application number:
**PCT/JP2012/083924**

(87) International publication number:
**WO 2013/100072 (04.07.2013 Gazette 2013/27)**

(54) **METHOD FOR CONTINUOUS PRODUCTION OF HIGH-MOLECULAR-WEIGHT POLYCARBONATE RESIN**

VERFAHREN ZUR KONTINUIERLICHEN HERSTELLUNG VON HOCHMOLEKULAREM POLYCARBONATHARZ

PROCÉDÉ POUR LA PRODUCTION EN CONTINU DE RÉSINE DE POLYCARBONATE DE POIDS MOLÉCULAIRE ÉLEVÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2011 JP 2011287048**

(43) Date of publication of application:
**05.11.2014 Bulletin 2014/45**

(73) Proprietor: **Mitsubishi Gas Chemical Company, Inc.**
**Tokyo 100-8324 (JP)**

(72) Inventors:
- **ISAHAYA, Yoshinori**
  **Tokyo 1250051 (JP)**
- **HIRASHIMA, Atsushi**
  **Tokyo 1250051 (JP)**
- **HARADA, Hidefumi**
  **Tokyo 1250051 (JP)**
- **ITO, Maki**
  **Tokyo 1250051 (JP)**
- **HAYAKAWA Jun-ya**
  **Tokyo 1250051 (JP)**
- **ISOBE, Takehiko**
  **Tokyo 1250051 (JP)**
- **TOKUTAKE, Taichi**
  **Tokyo 1250051 (JP)**
- **SHINKAI, Yousuke**
  **Tokyo 1250051 (JP)**

(74) Representative: **Hoffmann Eitle**
**Patent- und Rechtsanwälte PartmbB**
**Arabellastraße 30**
**81925 München (DE)**

(56) References cited:
**WO-A1-2011/062220**
**WO-A1-2011/062220**
**WO-A1-2012/108510**
**JP-A- H09 286 850**
**JP-A- H11 310 632**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a novel method for continuous production of a high-molecular-weight polycarbonate resin which comprises a process for a continuous highly-polymerizing reaction between an aromatic polycarbonate prepolymer and an aliphatic diol compound.

More precisely, the present invention relates to a method for a continuous production to obtain a high-molecular-weight polycarbonate resin having excellent performance which comprises a production process of an aromatic polycarbonate prepolymer and a highly-polymerization process of linking the aromatic polycarbonate prepolymer thus obtained with a linking agent composed of an aliphatic diol compound, wherein the linking and highly-polymerizing reaction between the aromatic polycarbonate prepolymer and the linking agent is carried out rapidly.

### Background Art

Since polycarbonate is excellent in heat resistance, impact resistance and transparency, it has been widely used in many fields in recent years. Various studies have been carried out with processes for production of polycarbonate. Among them, polycarbonate derived from aromatic dihydroxy compounds such as 2,2-bis(4-hydroxyphenyl)propane, hereinafter "bisphenol A", is industrialized by an interfacial polymerization method or a melt polymerization method.

According to the interfacial polymerization, polycarbonate is produced from bisphenol A and phosgene, but toxic phosgene has to be used. In addition, it remains a problem such as corrosion of equipments caused by by-products such as hydrogen chloride and sodium chloride and chlorine-containing compounds such as methylene chloride used in great quantities as a solvent, and difficulties in removal of impurities such as sodium chloride or residual methylene chloride which might have an influence on polymer properties.

Meanwhile, as a method for producing polycarbonate from an aromatic dihydroxy compound and diarylcarbonates, a melt-polymerization method has been long known, wherein, for example, bisphenol A and diphenylcarbonate are polymerized through a transesterification reaction under melting conditions while removing a by-product aromatic monohydroxy compound such as phenol in the case of bisphenol A and diphenylcarbonate. Unlike the interfacial polymerization method, the melt-polymerization method has advantages such as nonuse of solvents. However, it has an essential problem as follows:
As the polymerization proceeds, viscosity of polymer in the system increases drastically to make it difficult to remove by-product aromatic monohydroxy compounds efficiently out of the system which would cause the reaction rate decrease to an extremely low level to make it difficult to increase the polymerization degree. Therefore, it is needed to develop an effective method for producing a high-molecular-weight aromatic polycarbonate resin using a melt-polymerization.

In order to solve the above problem, various attempts have been studied to extract an aromatic monohydroxy compound from a polymer under conditions of high viscosity (Patent Document 1; Japanese Examined Patent Application Publication No. S50-19600, Patent Document 2; Japanese Unexamined Patent Application Publication No. H02-153923, Patent Document 3; U.S. Patent No. 5,521,275).

However, these methods disclosed in the above documents would not be able to increase the molecular weight of polycarbonate sufficiently. The above methods for increasing the molecular weight using catalyst in large quantity (Patent document 2, Patent document 3) or using strict conditions such as applying a high shearing (Patent document 1) might cause problems which might give a significant influence to the polymer such as the deterioration in hue or the progress of a cross-linking reaction.

It is also provided methods for increasing the polymerization degree of polycarbonate by adding a polymerization accelerator or a linking agent to the reaction system of melt-polymerization (Patent Document 4; European Patent No. 0 595 608, Patent Document 5; U. S. Patent No. 5,696,222, Patent Document 6; Japanese Patent No. 4, 112, 979, Patent Document 7; Japanese Unexamined Patent Application Publication (Translation of PCT Application) No. 2008-514754, Patent Document 8; Japanese Patent No. 4286914, Patent Document 9; Japanese Examined Patent Application Publication No. H06-94501, Patent Document 10; Japanese Unexamined Patent Application Publication No. 2009-102536).

Though the purposes are not exactly same, methods of adding diol compounds to the reaction system of dihydroxy compounds and diester carbonates had already been proposed (Patent Document 11; Japanese Patent No. 3317555, Patent Document 12; Japanese Patent No. 3301453).

As a method for highly polymerizing a polycarbonate, in addition, it is proposed to link a low-molecular-weight polycarbonate with a carbonate monomer (Patent Document 13; Japanese Patent No. 2810548) or to add cyclic carbonate compound to the reaction system (Patent Document 14; Japanese Patent No. 3271353) .

However, the above-mentioned methods have problems such that they are insufficient in the increase of polymerization degree or they might bring about deterioration of properties that the polycarbonate resin thus obtained

originally has such as heat stability, impact resistance and a color property.

As mentioned above, the conventional methods for producing high-molecular-weight aromatic polycarbonate have many problems, and still there are strong demands of developing an improved production method which enables the increase in molecular weight of the aromatic polycarbonate resin satisfactorily while keeping excellent qualities that a polycarbonate resin originally has.

The present inventors had found a method of producing a high-molecular-weight aromatic polycarbonate resin which enables to achieve a sufficiently high molecular weight while keeping excellent qualities that a polycarbonate resin originally has (Patent Document 15; WO2011/062220). This is a method of highly polymerization by carrying out a copolymerization reaction between an aromatic polycarbonate prepolymer having a low concentration of terminal hydroxy groups with a linking agent composed of an aliphatic diol compound having a specific structure to link with each other. According to the method, a sufficiently highly-polymerized polycarbonate resin having properties that an aromatic polycarbonate resin originally has can be obtained. The specific reaction scheme of the linking and highly polymerizing reaction using the aliphatic diol compound can be described below:

[Chemical Formula 1]

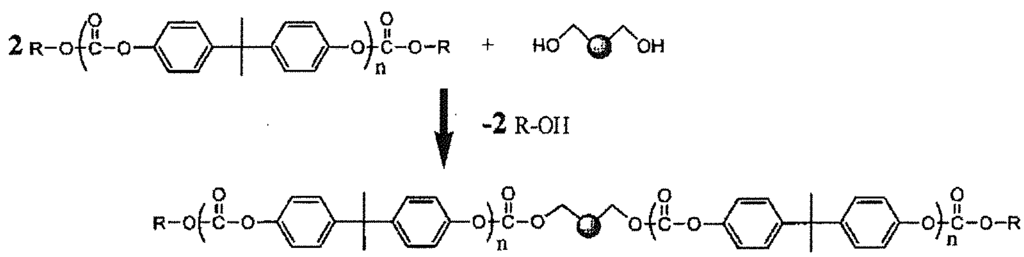


The process of a linking and highly polymerizing reaction between an aromatic polycarbonate prepolymer and an aliphatic diol compound can be described as a process of producing a copolymer of an aromatic polycarbonate prepolymer and an aliphatic diol compound. In the case of producing a copolymer by a continuous copolymerization reaction of comonomers, it is common that all the starting materials such as comonomers or reaction components are well mixed in advance in a mixer at a room temperature for relatively long time, and then the mixture is transferred to a reactor to be subjected to a copolymerization reaction. Particularly in the usual case of carrying out a transesterification reaction at the time of producing an aromatic polycarbonate resin, a horizontal stirring reactor having a large reactive surface area is used in many cases so as to promote the reaction by enhancing the degassing effect of by-product phenol. However, since the mixing power of the horizontal stirring reactor is not so high, it is most usual that the reaction components are introduced to the horizontal stirring reactor after being well mixed.

However, in the case of carrying out highly polymerization by a linking reaction between the above-mentioned aromatic polycarbonate prepolymer and an aliphatic diol compound having a specific structure, since the reaction rate of the prepolymer with the aliphatic diol compound is high and the linking reaction is promoted in an extremely rapid manner, the linking reaction would be promoted immediately after contacting or mixing the aromatic polycarbonate prepolymer and the aliphatic diol compound, and the prepolymer would be linked with each other to be highly polymerized as the progress of production of by-products such as phenol.

Therefore, in the case of carrying out a continuous production of the above-mentioned high-molecular-weight polycarbonate resin in a large scale, when the starting materials are stirred and mixed in a mixer at normal pressure in a conventional manner, a cleavage reaction, on the contrary, of the main chain of prepolymers might occur by by-products produced in the meantime to bring about deterioration of molecular weight.

In the case of producing the polycarbonate resin in a relatively small scale such as using a batch process, since the time of solving and stirring the materials is short, a high-molecular-weight polycarbonate resin may be collected as a product without being subjected to the cleavage reaction of the main chain of prepolymers so seriously. However, in the case of a continuous production which is an industrial method in a large scale, in general, transesterification reaction might occur during mixing the materials in a mixer, and as a result, while the linking reaction is promoted, the cleavage reaction of the main chain of prepolymers by by-products is also promoted.

When the cleavage reaction of the main chain of prepolymers is once promoted, it would be necessary to conduct reaction of the low-molecular-weight aromatic polycarbonate prepolymer with each other to increase the molecular weight, which takes a long time. As a result, in order to achieve a sufficiently high molecular weight, it might be necessary to retain the reaction mixture in the linking and highly polymerizing reactor for a long time. When the retention time of the reaction mixture in the reactor is long, deterioration of quality of the high-molecular-weight polycarbonate resin thus obtained might be brought about such as increase of a branching degree or a structural viscosity index (N-value) determined below, occurrence of a significant coloration and deterioration of hue and increase of different kind structures.

Therefore, regarding the method of industrial continuous production of the above-mentioned high-molecular-weight polycarbonate resin in a large scale, it is required to inhibit the progression of cleavage reaction and to shorten the retention time of the reaction mixture in the linking and highly polymerizing reactor during the process of carrying out the linking and highly polymerizing reaction of the aromatic polycarbonate prepolymer and the aliphatic diol compound.

Meanwhile, a continuous multistage polymerization wherein multiple polymerization vessels are arranged in tandem is already known (Patent Document 16; Japanese Unexamined Patent Application Publication No. 2009-161745, Patent Document 17; Japanese Unexamined Patent Application Publication No. 2010-150540, Patent Document 18; Japanese Unexamined Patent Application Publication No. 2011- 6553) . However, there is no proposal to employ a continuous multistage polymerization to a production process of highly polymerized polycarbonate resin by conducting a linking reaction between an aromatic polycarbonate prepolymer and an aliphatic diol compound wherein an improvement to inhibit the progression of cleavage reaction by by-products and to shorten the retention time of the reaction mixture in the linking and highly polymerizing reactor is provided.

## Prior Art Documents

### [Patent Document]

Pat. Doc. 1: Jpn. Examined Pat. Appl. Publ. No. S50-19600
Pat. Doc. 2: Jpn. Unexamined Pat. Appl. Publ. No. H02-153923
Pat. Doc. 3: U.S. Pat. No. 5,521,275
Pat. Doc. 4: European Pat. No. 0 595 608
Pat. Doc. 5: U.S. Pat. No. 5,696,222
Pat. Doc. 6: Jpn. Pat. No. 4112979
Pat. Doc. 7: Jpn. Unexamined Pat. Appl. Publ. (Translation of PCT Application) No. 2008-514754
Pat. Doc. 8: Jpn. Pat. No. 4286914
Pat. Doc. 9: Jpn. Examined Pat. Appl. Publ. No. H06-94501
Pat. Doc. 10: Jpn. Unexamined Pat. Appl. Publ. No. 2009-102536
Pat. Doc. 11: Jpn. Pat. No. 3317555
Pat. Doc. 12: Jpn. Pat. No. 3301453
Pat. Doc. 13: Jpn. Pat. No. 2810548
Pat. Doc. 14: Jpn. Pat. No. 3271353
Pat. Doc. 15: WO2011/062220
Pat. Doc. 16: Jpn. Unexamined Pat. Appl. Publ. No. 2009-161745
Pat. Doc. 17: Jpn. Unexamined Pat. Appl. Publ. No. 2010-150540
Pat. Doc. 18: Jpn. Unexamined Pat. Appl. Publ. No. 2011-006553

## Disclosure of the Invention

### Problems to be Solved by the Invention

The problem to be solved by the present invention is to provide an improved method for continuous production of a high-molecular-weight polycarbonate resin comprising a process of conducting a continuous highly-polymerizing reaction of an aromatic polycarbonate prepolymer with an aliphatic diol compound, wherein the progression of cleavage reaction of a main chain of the prepolymer by by-products is inhibited and the continuous highly-polymerizing reaction is promoted, whereby a high-molecular-weight polycarbonate resin having excellent qualities can be produced.

### Means for Solving the Problems

As a result of the intensive studies to solve the above problems, the present inventors have found that the above problems can be solved by carrying out continuous feed of the aliphatic diol compound under an extremely-limited

reduced pressure in the process of conducting a continuous highly-polymerizing reaction of an aromatic polycarbonate prepolymer with an aliphatic diol compound, and thus completed the present invention.

That is, the present invention is related to a method for a continuous production of a high-molecular-weight polycarbonate resin as follows:

1) A method for a continuous production of a high-molecular-weight polycarbonate resin which comprises
a process (A) of producing an aromatic polycarbonate prepolymer by a polycondensation reaction of an aromatic dihydroxy compound with diester carbonate in a polycondensation reactor and
a process (B) of conducting a linking and highly-polymerizing reaction of said aromatic polycarbonate prepolymer produced by said process (A) with an aliphatic diol compound in a linking and highly-polymerizing reactor, wherein said aromatic polycarbonate prepolymer produced by said process (A) is continuously fed into the linking and highly-polymerizing reactor while said aliphatic diol compound is continuously fed into the linking and highly-polymerizing reactor under reduced pressure of 1333 Pa (10 torr) or less.

2) The method for a continuous production of a high-molecular-weight polycarbonate resin according to 1), wherein the retention time of the reaction mixture in said linking and highly-polymerizing reactor is 60 minutes or less.

3) The method for a continuous production of a high-molecular-weight polycarbonate resin according to 1), wherein said aliphatic diol compound is a compound represented by the following general formula (A):
[Chemical Formula 2]

$$\mathbf{HO\text{-}(CR_1R_2)_n\text{-}Q\text{-}(CR_3R_4)_m\text{-}OH} \cdots \qquad (A)$$

wherein "Q" represents a hydrocarbon group having at least 3 carbon atoms which may contain an atom of a different kind; $R_1$, $R_2$, $R_3$ and $R_4$ each independently represent a group selected from the group consisting of a hydrogen atom, an aliphatic hydrocarbon group having 1-30 carbon atoms and an aromatic hydrocarbon group having 6-20 carbon atoms, with the proviso that at least one of $R_1$ and $R_2$ and at least one of $R_3$ and $R_4$ are each independently selected from the group consisting of a hydrogen atom and said aliphatic hydrocarbon group; "n" and "m" each independently represent an integer of 0-10 or "n" and "m" each independently represent an integer of 1-10 in the case that Q contains no aliphatic hydrocarbon groups binding to the terminal hydroxy groups.

4) The method for a continuous production of a high-molecular-weight polycarbonate resin according to 3), wherein said aliphatic diol compound is a primary diol compound.

5) The method for a continuous production of a high-molecular-weight polycarbonate resin according to 1), wherein said aliphatic diol compound has a boiling point at normal pressure of 240°C or higher.

6) The method for a continuous production of a high-molecular-weight polycarbonate resin according to 1), wherein said aromatic polycarbonate prepolymer obtained by said process (A) has the concentration of terminal hydroxy groups of 1,500 ppm or less.

7) The method for a continuous production of a high-molecular-weight polycarbonate resin according to 1), wherein said high-molecular-weight polycarbonate resin has a structural viscosity index (N-value) represented by the following mathematical formula (I) of 1.30 or less:

[Mathematical Formula 1]

$$\text{N-value}=(\log(Q160)-\log(Q10))/(\log160-\log10) \quad \cdots(I)$$

wherein Q160 represents a melting fluid volume per unit time (ml/sec) measured under the conditions of 280°C and 160kg load and Q10 represents a melting fluid volume per unit time (ml/sec) measured under the conditions of 280°C and 10kg load.

8) The method for a continuous production of a high-molecular-weight polycarbonate resin according to 1), wherein the weight-average molecular weight of said high-molecular-weight polycarbonate resin ("$Mw_{hp}$"), the weight-average molecular weight of said aromatic polycarbonate prepolymer obtained by said process (A) ("$Mw_{pp}$") and the retention time ("RT"; min) of the reaction mixture in said linking and highly-polymerizing reactor in said process (B) are represented by the following mathematical formula (IV) wherein k' which represents the increased amount of the weight-average molecular weight per minute is 500 or more.

[Mathematical Formula 2]

$$k'=(Mw_{hp} - Mw_{pp})/RT \quad \cdots(IV)$$

9) The method for a continuous production of a high-molecular-weight polycarbonate resin according to 1), wherein said linking and highly-polymerizing reactor is a multiaxial horizontal stirred reactor having a number of stirring axes wherein
at least one of said stirring axes having a horizontal rotary shaft and stirring blades mounted approximately orthogonally on said horizontal rotary shaft which are discrete from each other, with L/D in the range from 1 to 15 wherein L is the length of said horizontal rotary shaft and D is the rotation diameter of said stirring blades, and
having a feed inlet of said aromatic polycarbonate prepolymer and, on the opposite side thereof, an extract outlet of said high-molecular-weight polycarbonate resin thus obtained.
10) The method for a continuous production of a high-molecular-weight polycarbonate resin according to 1), wherein said linking and highly-polymerizing reactor is a multiaxial horizontal kneaded reactor which has a number of continuous screw type stirring shafts with L/D in the range from 20 to 100 wherein L is the length of said stirring shafts and D is the rotation diameter, and has a feed inlet of said aromatic polycarbonate prepolymer and, on the opposite side thereof, an extract outlet of said high-molecular-weight polycarbonate resin thus obtained.
11) The method for a continuous production of a high-molecular-weight polycarbonate resin according to 1), the viscosity of said aliphatic diol compound at the time of being fed continuously to said linking and highly-polymerizing reactor is in the range from 0.1 to 10,000 poise.
12) The method for a continuous production of a high-molecular-weight polycarbonate resin according to 1), said aliphatic diol compound is subjected to a dehydration treatment so as to have the water content of 3% by weight or less before being fed continuously to said linking and highly-polymerizing reactor.
13) The method for a continuous production of a high-molecular-weight polycarbonate resin according to 1), the feed amount per unit time of the aliphatic diol compound to be fed continuously to said linking and highly-polymerizing reactor is 0.01-1.0 times (molar ratio) based upon the total amount of terminal groups of the feed amount per unit time of the aromatic polycarbonate prepolymer to be fed continuously to said linking and highly-polymerizing reactor.

**[Effect of the Invention]**

The reaction of the aromatic polycarbonate prepolymer with the aliphatic diol compound of the present invention is so quick that, when using conventional methods, degassing of by-products such as phenol would be insufficient and the progress of cleavage reaction of the main chain of prepolymer by by-products would occur. Therefore, in order to achieve high molecular weight, it would be necessary to retain the reaction mixture in the reactor for long time.

According to the present invention, on the other hand, in the process of conducting the linking and highly-polymerizing reaction of the aromatic polycarbonate prepolymer with the aliphatic diol compound, the aliphatic diol compound is fed continuously to the linking and highly-polymerizing reactor directly under extremely high vacuum that is the condition under reduced pressure of 1333 Pa (10 torr) or less, whereby by-products such as phenol is degassed quickly which enables to promote the linking reaction while inhibiting the progression of cleavage reaction of the main chain of prepolymer by by-products and to shorten the retention time of the reaction mixture in the linking and highly-polymerizing reactor.

Aliphatic diol compounds having relatively high boiling points are relatively low in volatility. Accordingly, in the process of producing a high-molecular-weight polycarbonate resin from an aromatic polycarbonate prepolymer and an aliphatic diol compound, by employing an aliphatic diol compound having a relatively high boiling point, degassing of the aliphatic diol compound can be inhibited to the minimum, and as a result, the need of excessive use thereof can be avoided. Therefore, there is an economical advantage when conducting a continuous production industrially.

According to the method of the present invention as described above, a high-quality high-molecular-weight polycarbonate resin having a sufficiently high molecular weight, having a low N-value, excellent in hue and having a low content of different kind structures can be obtained by an economically efficient method.

**Brief Description of the Drawings**

[Fig. 1]
Fig.1 shows an outline of one embodiment of manufacturing equipment to be used for the production method of the present invention that is the manufacturing equipment used in Example 1.
[Fig.2]
Fig.2 shows an outline of manufacturing equipment used in Comparative Example 1.
[Fig.3]
Fig.3 shows a chart showing the relationship between the retention time and Mw according to Examples 1, 3, 6 and Comparative Examples 1, 5, 6.

[Fig.4]
Fig.4 shows a chart showing the relationship between the retention time and N-value according to Examples 1, 3, 6 and Comparative Examples 1, 5, 6.
[Fig.5]
Fig. 5 shows a chart showing the relationship between the retention time and YI-value according to Examples 1, 3, 6 and Comparative Examples 1, 5, 6.

**Mode(s) for Carrying Out the Invention**

The production method of the present invention, using an aromatic dihydroxy compound and diester carbonate as starting materials, comprises a polycondensation process (A) of producing an aromatic polycarbonate prepolymer by a polycondensation reaction (or a transesterification reaction) of said starting materials, and a process (B) of conducting a linking and highly-polymerizing reaction of said aromatic polycarbonate prepolymer produced by said process (A) with an aliphatic diol compound.
The process (B) is a process of linking the aromatic polycarbonate prepolymer with the aliphatic diol compound to conduct highly polymerization which can be described as a copolymerization process using the aromatic polycarbonate prepolymer and the aliphatic diol compound as comonomers.
The production method of the present invention can additionally comprise conventional processes such as a regulating process of main starting materials wherein main starting materials such as aromatic dihydroxy compounds and diester carbonate are regulated, a process of degassing and removing of unreacted materials and/or reaction by-products in the reaction mixture after completion of the processes (A) and/or (B), a process of adding additives such as a heat stabilizer, a mold release agent and coloring materials and a process of pelletizing the high-molecular-weight polycarbonate resin thus obtained into pellets having a desired diameter, in combination with the above processes (A) and (B) . In addition, a regulating process of a linking agent wherein the aliphatic diol compound which is the linking agent are melted and/or subjected to dehydration treatment in advance so that the aliphatic diol compound can be mixed quickly and homogeneously in the linking and highly-polymerizing reactor.
The modes for carrying out the present invention will be described more precisely according to the drawings. As shown in Fig. 1 which shows an outline of one embodiment of manufacturing equipment to be used for the production method of the present invention, according to one embodiment of the method of the present invention, the high-molecular-weight polycarbonate resin of the present invention is produced through a regulating process of main starting materials wherein the aromatic dihydroxy compound and diester carbonate as the main starting materials are regulated, a polycondensation process (A) wherein these starting materials are subjected to a polycondensation reaction in a molten state to prepare an aromatic polycarbonate prepolymer and then, a linking and highly-polymerizing process (B) wherein the aromatic polycarbonate prepolymer prepared by the process (A) is reacted with the aliphatic diol compound which is a linking agent.
Subsequently, the reaction is terminated and then a pellet of the high-molecular-weight polycarbonate resin is obtained through a process of degassing and removing unreacted starting materials and/or reaction by-products in the polymerization reaction mixture (not shown in Fig.1), a process of adding additives such as a heat stabilizer, a mold release agent and a coloring materials (not shown in Fig.1) and a process of pelletizing the polycarbonate resin to form a pellet having an intended diameter (not shown in Fig.1).
According to the present invention, a multistage reaction process using different reactors in the process (A) and the process (B) is employed. The polycondensation reactor for the process (A) and the linking and highly-polymerizing reactor for the process (B) are connected in series.
The polycondensation reactor for the process (A) can be composed of a single reactor or a number of reactors connected in series. Preferably, 2 or more reactors are connected in series. More preferably, 2 to 6 reactors are connected in series.
The linking and highly-polymerizing reactor for the process (B) can be composed of a single reactor or a number of reactors connected in series. Preferably, a single reactor is used.

1. Regulating Process of Main Starting Materials

In the regulating process of main starting materials, an aromatic dihydroxy compound and diester carbonate which are the main starting materials to be used for the method of the present invention are regulated.

(1) Apparatus

Apparatus to be used for the regulating process of main starting materials is equipped with a mixing tank for mixing the starting materials (1R in Fig.1) and a feed pump for feeding the starting materials thus regulated to the

polycondensation process (A) (1P in Fig.1). An aromatic dihydroxy compound and diester carbonate as the main starting materials are fed continuously in a molten state from the feed inlet 1M to the mixing tank 1R in a nitrogen atmosphere.

The aromatic dihydroxy compound and diester carbonate are mixed and melted at a rate of intended molar ratio, preferably (diester carbonate)/(aromatic dihydroxy compound) = 1.0 to 1.3 (molar ratio) in a nitrogen atmosphere to prepare a molten mixture liquid of starting materials.

Specifications of the mixing tank 1R are not particularly limited and any conventional tanks publicly known can be used. For example, a tank equipped with a Maxblend impeller (1Y in Fig. 1) can be used.

For carrying out a continuous production, it is preferable to use two mixers for the regulating process of main starting materials as shown in Fig.1. By using two mixers, mixing and melting can be carried out alternately and the materials can be fed continuously to the reactor 3R by switching the valve 1Bp.

(2) Aromatic Dihydroxy Compound

Examples of the aromatic dihydroxy compounds which is one of the main starting materials include a compound represented by the following general formula (1):

[Chemical Formula 3]

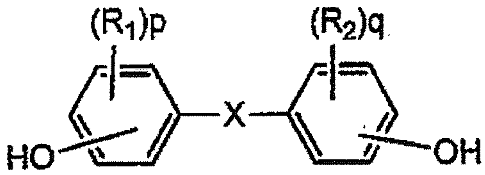

• • • (1)

In the general formula (1), the two phenylene groups can be any of p-phenylene groups, m-phenylene groups or o-phenylene groups respectively. The two phenylene groups may be in same substitution position or may be in different substitution position from each other. It is preferable that both of them are p-phenylene groups.

In the general formula (1), $R_1$ and $R_2$ each independently represent a halogen atom, a nitro group, an amino group, an alkyl group having 1-20 carbon atoms, an alkoxy group having 1-20 carbon atoms, a cycloalkyl group having 6-20 carbon atoms, an aryl group having 6-20 carbon atoms, a cycloalkoxyl group having 6-20 carbon atoms, an aryloxy group having 6-20 carbon atoms or an aralkyl group having 6-20 carbon atoms.

Preferable examples of $R_1$ and $R_2$ include a fluorine atom, an amino group, a methoxy group, a methyl group, a cyclohexyl group and a phenyl group.

"p" and "q" each independently represent an integer of 0-4, preferably 0-2. "X" represents a single bond or an organic group selected from the group consisting of the divalent organic groups represented by the following general formulas (2). In the general formula (2), $R_3$ and $R_4$ each independently represent a hydrogen atom, an alkyl group having 1-10 carbon atoms, preferably 1-6 carbon atoms, an aryl group having 6-10 carbon atoms, or an aliphatic ring wherein $R_3$ and $R_4$ are linked with each other.

[Chemical Formula 4]

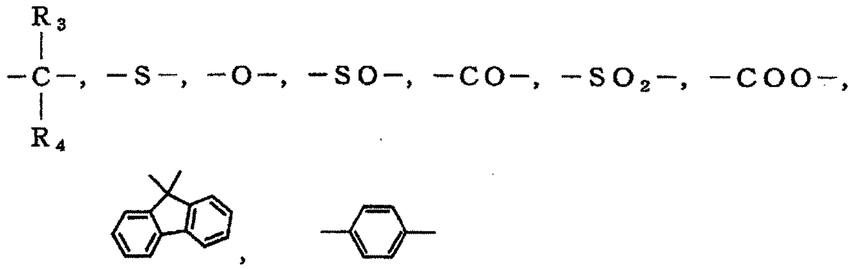

• • • (2)

Examples of the above-mentioned aromatic dihydroxy compounds include bis(4-hydroxyphenyl)methane, 1,1-bis(4-hydroxyphenyl)ethane, 1,2-bis(4-hydroxyphenyl)ethane, 2,2-bis(4-hydroxyphenyl)propane, 2,2-bis(4-hydroxy-3-isopropylphenyl)butane, 2,2-bis(4-hydroxyphenyl)butane, 2,2-bis(4-hydroxyphenyl)octane, 2,2-bis(3-tert-butyl-4-hydroxyphenyl)propane, 2,2-bis(3-bromo-4-hydroxyphenyl)propane, bis(4-hydroxyphenyl)phenylmethane, 1,1-bis(4-hydroxyphenyl)-1-phenylethane, bis(4-hydroxyphenyl)diphenylmethane, 2,2-bis(4-hydroxy-3-metnylphenyl)propane, 1,1-bis(4-hydroxy-3-tert-butylphenyl)propane, 2,2-bis(3-cyclohexyl-4-hydroxyphenyl)propane, 1,1-bis(3-cyclohexyl-4-hydroxyphenyl)cyclohexane, 2,2-bis(3,5-dimethyl-4-hydroxyphenyl)propane, 2,2-bis(4-hydroxy-3-phenylphenyl)propane, 2,2-bis(4-hydroxy-3-phenylphenyl)propane, 2,2-bis(4-hydroxy-3-bromophenyl)propane, 2,2-bis(3,5-dibromo-4-hydroxyphenyl)propane, 1,1-bis(4-hydroxyphenyl)cyclopentane, 1,1-bis(4-hydroxyphenyl)cyclohexane, 2,2-bis(4-hydroxy-3-methoxyphenyl)propane, 1,1-bis(4-hydroxyphenyl)-3,3,5-trimethylcyclohexane, 4,4'-dihidroxydiphenylether, 4,4'-dihidroxybiphenyl, 9,9-bis(4-hydroxyphenyl)fluorene, 9,9-bis(4-hydroxy-3-methylphenyl)fluorene, 4,4'-dihydroxy-3,3'-dimethylphenylether, 4,4'-dihydroxyphenylsulfide, 4,4'-dihydroxy-3,3'-dimethyldiphenylsulfide, 4,4'-dihydroxydiphenylsulfoxide, 4,4'-dihydroxy-3,3'-dimethyldiphenylsulfoxide, 4,4'-dihydroxydiphenylsulfone, 4,4'-dihydroxy-3,3'-dimethyldiphenylsulfone, 4,4'-sulfonyldiphenol, 2,2'-diphenyl-4,4'-sulfonyldiphenol, 2,2'-dimethyl-4,4'-sulfonyldiphenol, 1,3-bis{2-(4-hydroxyphenyl)propyl}benzene, 1,4-bis{2-(4-hydroxyphenyl)propyl}benzene, 1,4-bis(4-hydroxyphenyl)cyclohexane, 1,3-bis(4-hydroxyphenyl)cyclohexane, 4,8-bis(4-hydroxyphenyl)tricyclo[5.2.1.0$^{2.6}$]decane, 4,4'-(1,3-adamantanediyl)diphenol, and 1,3-bis(4-hydroxyphenyl)-5,7-dimethyladamantane.

Among them, 2,2-bis(4-hydroxyphenyl)propane (= bisphenol A or "BPA") is preferable because of stability as a monomer and availability of a commercial product having a low impurity content. Two or more of the above-mentioned aromatic dihydroxy compounds can be used in combination with each other if necessary.

According to the present invention, it is possible to use dicarboxylic acid compounds such as terephthalic acid, isophthalic acid, naphthalene dicarboxylic acid and 1,4-cyclohexane dicarboxylic acid in combination with the above-mentioned aromatic dihydroxy compound to produce a polyestercarbonate, if necessary.

In addition, it is possible to use multifunctional compound(s) having at least 3 functional groups, preferably 3-6 functional groups, in combination with the above-mentioned aromatic dihydroxy compound. Preferable examples of the multifunctional compounds include a compound having a phenolic hydroxy group and/or a carboxyl group. Most preferable examples thereof include 1,1,1-tris(4-hydroxyphenyl)ethane.

(3) Diester Carbonate

Examples of diester carbonate to be used for the present invention include a compound represented by the following general formula (3):

[Chemical Formula 5]

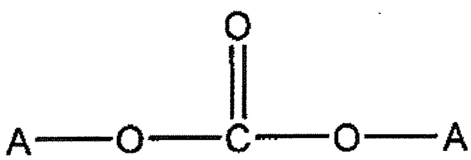

• • • (3)

In the above general formula (3), "A" represents a monovalent linear, branched or ringed hydrocarbon group having 1-10 carbon atoms which may be substituted. The two "A"s may be the same or different from each other.

Examples of the diester carbonate include aromatic diester carbonates such as diphenyl carbonate, ditolyl carbonate, bis(2-chlorophenyl)carbonate, m-cresyl carbonate, dinaphthyl carbonate and bis(4-phenylphenyl)carbonate. Other diester carbonates such as dimethyl carbonate, diethyl carbonate, dibutyl carbonate and dicyclohexyl carbonate can be used if desired. Among them, it is preferable to use diphenyl carbonate from a viewpoint of reactivity, stability against coloring of the resin thus obtained and cost.

(4) Ratio of Materials

According to the present invention, it is preferable to use diester carbonate in an amount excess to the aromatic dihydroxy compound in order to introduce end-capped terminal groups at the time of producing the aromatic polycarbonate prepolymer. It is more preferable to use the aromatic polycarbonate compound and diester carbonate at a rate of [diester carbonate]/[aromatic dihydroxy compound] = 1.0-1.3 (molar ratio). That is, diester carbonate is used preferably in an amount of 1.0 to 1.3 mol, more preferably 1.02 to 1.20 mol per mole of the aromatic dihydroxy compound.

(5) Catalyst

Transesterification catalysts such as basic compound catalysts which are commonly used for producing a polycarbonate resin can be used as a catalyst for the linking and highly-polymerizing reaction of the aromatic polycarbonate prepolymer with the aliphatic diol compound.

Examples of the basic compound catalysts include alkali metal compounds and/or alkali earth metal compounds and nitrogen-containing compounds.

Preferable examples of alkali metal compounds and/or alkali earth metal compounds include organic acid salts, inorganic salts, oxide, hydroxide, hydride, alkoxide, quaternary ammonium hydroxide and salts thereof and amines of alkali metals and alkali earth metals. These compounds can be used each independently or two or more of them can be used in combination with each other.

Examples of alkali metal compounds include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium gluconate, sodium boron hydride, sodium phenylborate, sodium benzoate, potassium benzoate, cesium benzoate, lithium benzoate, disodium hydrogenphosphate, dipotassium hydrogenphosphate, dilithium hydrogenphosphate, disodium phenylphosphate, a disodium salt of bisphenol A, a dipotassium salt of bisphenol A, a dicesium salt of bisphenol A and a dilithium salt of bisphenol A, a sodium salt of phenol, a potassium salt of phenol, a cesium salt of phenol and a lithium salt of phenol.

Examples of alkali earth metal compounds include magnesium hydroxide, calcium hydroxide, strontium hydroxide, barium hydroxide, magnesium hydrogen carbonate, calcium hydrogen carbonate, strontium hydrogen carbonate, barium hydrogen carbonate, magnesium carbonate, calcium carbonate, strontium carbonate, barium carbonate, magnesium acetate, calcium acetate, strontium acetate, barium acetate, magnesium stearate, calcium stearate, calcium benzoate and magnesium phenylphosphate.

Examples of nitrogen-containing compounds include base such as quaternary ammonium hydroxides containing alkyl groups and/or aryl groups such as tetramethyl ammonium hydroxide, tetraethyl ammonium hydroxide, tetrapropyl ammonium hydroxide, tetrabutyl ammonium hydroxide and trimethylbenzyl ammonium hydroxide; tertiary amines such as triethylamine, dimethylbenzylamine and triphenylamine; secondary amines such as diethylamine and dibutylamine; primary amines such as propylamine and butylamine; imidazoles such as 2-methylimidazole, 2-phenylimidazole and benzoimidazole; and a base or a basic salt such as ammonia, tetramethyl ammonium borohydride, tetrabutyl ammonium borohydride, tetrabutyl ammonium tetraphenylborate and tetraphenyl ammonium tetraphenylborate, or basic salts thereof.

Examples of other transesterification catalysts include salts of zinc, tin, zirconium or lead can preferably be used. They can be used each independently or two or more of them can be used in combination with each other.

More precise examples of the transesterification catalysts include zinc acetate, zinc benzoate, zinc 2-ethylhexanoate, tin chloride (II), tin chloride (IV), tin acetate (II), tin acetate (IV), dibutyltin dilaurate, dibutyltin oxide, dibutyltin dimethoxide, zirconium acetylacetonate, zirconium oxyacetate, zirconium tetrabutoxide, lead acetate (II) and lead acetate (IV).

According to the production method of the present invention, it is preferably to use an aqueous solution of cesium carbonate ($Cs_2CO_3$).

The above catalysts can be used in an amount of preferably $1\times10^{-9}$ to $1\times10^{-3}$ mol, more preferably $1\times10^{-7}$ to $1\times10^{-5}$ mol per mole of the total amount of dihydroxy compounds.

2. Process (A); Polycondensation Process

In the process (A), the aromatic dihydroxy compound and diester carbonate which are the main starting materials are subjected to polycondensation reaction in a polycondensation reactor to produce an aromatic polycarbonate prepolymer. This polycondensation reaction is a melt polymerization reaction based on transesterification reaction.

(1) Apparatus

As the polycondensation reactor to be used for conducting the process (A), a single reactor or two or more reactors can be used. In the case of using two or more reactors, they are connected in series. It is preferable to use two or more reactors, more preferably 2-6 reactors, most preferably 3-5 reactors by connecting in series. The polycondensation reactor can be a vertical reactor or can be a horizontal reactor. It is preferable to use a vertical reactor.

In Fig.1, for example, the first vertical stirred reactor 3R, the second vertical stirred reactor 4R, the third vertical stirred reactor 5R and the fourth vertical stirred reactor 6R are equipped as polycondensation reactors for the process (A).

Each polycondensation reactors can be equipped with stirring devices such as well-known stirring blades. Examples of the stirring blades include an anchor blade, a Maxblend impeller and a double helical ribbon blade.

For example, the first vertical stirred reactor 3R, the second vertical stirred reactor 4R and the third vertical stirred reactor 5R are equipped with Maxblend impellers 3Y, 4Y and 5Y, and the fourth vertical stirred reactor 6R is equipped with a double helical ribbon blade 6Y.

In addition, each reactor can be equipped with a preheater, a gear pump, a distillation tube to discharge by-products produced by polycondensation reaction or the like, a condenser, a condensing apparatus such as a dry ice trap, a receiver such as a recovery tank, or a decompression unit for keeping an intended reduced pressure.

All of the reactors to be used for a series of the continuous production method of the present invention are firstly controlled so that an inner temperature and pressure are reached to the predetermined range.

In the embodiment of the continuous production using the manufacturing equipment shown in Fig.1, the inner temperature and pressure of 5 reactors connected in series (Process (A) ; the first vertical stirred reactor 3R, the second vertical stirred reactor 4R, the third vertical stirred reactor 5R, the fourth vertical stirred reactor 6R, Process (B); the fifth horizontal stirred reactor 7R) are controlled in advance depending on the reactions of the melt polycondensation reaction and the linking and highly-polymerizing reaction respectively.

The apparatus shown in Fig. 1, for example, is equipped with preheaters 3H, 4H, 5H and 6H and gear pumps 3P, 4P, 5P and 6P. In addition, the 4 reactors are equipped with distillation tubes 3F, 4F, 5F and 6F. The distillation tubes 3F, 4F, 5F and 6F are connected to condensing apparatuses 3C, 4C, 5C and 6C respectively. The reactors are also kept under intended reduced pressure by decompression devices 3V, 4V, 5V and 6V respectively.

(2) Polycondensation Reaction

The reaction conditions in the polycondensation reactor is arranged so that a high temperature, high vacuum, a low rate of stirring can be achieved along with the progression of polycondensation reaction. During the polycondensation reaction, fluid level is controlled so that the average retention time of reaction mixture in each reactor becomes, for example, around 30 to 120 minutes before adding the linking agent. The by-product phenol produced by melt polycondensation reaction is distilled out of the reaction system through the distillation tubes 3F, 4F, 5F and 6F equipped to the reactors.

The degree of pressure reduction in the process (A) is preferably 100 to 0.0075 torr, (13.3 kPa to 1 Pa) and the inner temperature of the reactor is preferably 140 to 300°C.

More precisely, according to the method shown in Fig.1, the process (A) is carried out by using 4 reactors of the first vertical stirred reactor to the fourth vertical stirred reactor, the temperature and pressure thereof being typically arranged as shown below, wherein the linking and highly-polymerizing reactor (the fifth horizontal stirred reactor) of the process (B) connected in series to the 4 reactors of the process (A) is also described.

(Preheater 1H) 180-230°C
(The first vertical stirred reactor 3R)
Inner temperature: 150-250°C, Pressure: from normal pressure to
100 torr (13.3kPa), Temperature of heating medium: 220-280°C (Preheater 3H) 200-250°C
(The second vertical stirred reactor 4R)
Inner temperature: 180-250°C, Pressure: from 100 torr (13.3kPa) to 75 torr (10kPa), Temperature of heating medium: 220-280°C (Preheater 4H) 230-270°C
(The third vertical stirred reactor 5R)
Inner temperature: 220-270°C, Pressure: from 75 torr (10kPa) to 1 torr (133Pa), Temperature of heating medium: 220-280°C (Preheater 5H) 230-270°C

(The fourth vertical stirred reactor 6R)
Inner temperature: 220-280°C, Pressure: from 1 torr (133Pa) to 0.0075 torr (1Pa), Temperature of heating medium: 220-300°C (Preheater 6H) 270-340°C
(The fifth horizontal stirred reactor 7R)
Inner temperature: 260-340 °C, Pressure: 10 torr (1333Pa) or less, Temperature of heating medium: 260-340°C

Then, after the inner temperature and pressure of all the reactors to be used for the continuous production of the present invention are achieved to the range within from -5% to +5% of predetermined values, the melt mixture of starting materials prepared separately in the starting material mixer 1R is fed continuously to the first vertical stirred reactor 3R through the starting material feed pump 1P and preheater 1H. At the start of feeding the melt mixture of starting materials, a catalyst such as a cesium carbonate aqueous solution is fed thereto continuously from the catalyst feed inlet 1Cat set along the transfer pipe of the melt mixture of starting materials to initiate melt polycondensation based on a transesterification reaction.

The number of rotations of the stirring blades in the reactors is not particularly limited. It is preferable to keep the rotation frequency within the range from 200 to 10 rpm.

While distilling by-product phenol produced along with the progression of the reaction out through the distillation tube, the polycondensation reaction is carried out by keeping the liquid level constant so that the average retention time becomes a predetermined value.

The average retention time of each reactor is not particularly limited. It is normally from 30 to 120 minutes.

In the production equipment shown in Fig.1, for example, melt polymerization is carried out in the first vertical stirred reactor 3R in a nitrogen atmosphere by keeping the rotation frequency of the Maxblend impeller 3Y to 160 rpm at a temperature of 20°C under the pressure of 200 torr (27 kPa). Then, while distilling by-product phenol out through the distillation tube 3F, the polycondensation reaction is carried out by keeping the liquid level constant so that the average retention time becomes 60 minutes.

Subsequently, the polycondensation reaction solution is discharged from the bottom of the first vertical stirred reactor 3R through the gear pump 3P, and then is fed continuously to the second vertical stirred reactor 4R through preheater 3H, then to the third vertical stirred reactor 5R by the gear pump 4P through preheater 4H, further to the fourth vertical stirred reactor 6R by the gear pump 5P through preheater 5H in order so that the polycondensation reaction is progressed to produce an aromatic polycarbonate prepolymer.

(3) Aromatic Polycarbonate Prepolymer

The weight-average molecular weight of the aromatic polycarbonate prepolymer obtained in the rearmost polycondensation reactor of the process (A) is not particularly limited. It is preferable that said weight-average molecular weight is 10,000-50,000, more preferably 15,000-35,000 in terms of polystyrene (Mw) measured by GPC, and this prepolymer is then fed continuously into the linking and highly-polymerizing reactor of the process (B).

As for the aromatic polycarbonate prepolymer obtained in the rearmost polycondensation reactor of the above-mentioned process (A), it is also preferable that the content of end-capped terminal groups derived from an aromatic monohydroxy compound based upon the total amount of terminals is 60 mol% or more.

The content of end-capped terminal groups based upon the total amount of terminal groups of a polymer can be analyzed by $^1$H-NMR analysis.

It is also possible to analyze the concentration of terminal hydroxy groups thereof by spectrometric measurement using Ti complex. The concentration of terminal hydroxy groups by this measurement is preferably 1,500 ppm or less, more preferably 1,000 ppm or less, most preferably 750 ppm or less. When the concentration of terminal hydroxy groups is higher than the above range or the concentration of the end-capped terminal groups is lower than the above range, a polycarbonate resin having sufficiently high molecular weight might not be obtained.

According to the present invention, "total amount of terminal groups of the aromatic polycarbonate prepolymer" is calculated on the assumption that, for example, the total amount of the terminal groups of 0.5 mol of a polycarbonate having no branching structures or having a linear structure is 1 mol.

Examples of the end-capped terminal groups include a phenyl terminal group, a cresyl terminal group, an o-tolyl terminal group, a p-tolyl terminal group, a p-t-butylphenyl terminal group, a biphenyl terminal group, an o-methoxycarbonylphenyl terminal group and a p-cumylphenyl terminal group.

Among them, a terminal group derived from an aromatic monohydroxy compound having a low boiling point which can be easily removed from the reaction system of the linking and highly-polymerizing reaction with the aliphatic diol compound is preferable. A phenyl terminal group or a p-tert-butylphenyl terminal group is more preferable.

In the case of melt polymerization, end-capped terminal groups can be introduced by using diester carbonate in an amount excess to the aromatic dihydroxy compound at the time of producing the aromatic polycarbonate prepolymer. While depending on the reaction apparatus to be used and reaction conditions, diester carbonate is used preferably in an amount of 1.00 to 1.30 mol, more preferably 1.02 to 1.20 mol, per mole of the aromatic dihydroxy compound, thereby

an aromatic polycarbonate prepolymer satisfying the above-mentioned content of end-capped terminal groups can be obtained.

3. Process (B); Linking and Highly-polymerizing Reaction

In the process (B), a high-molecular-weight polycarbonate resin is produced by a linking and highly-polymerizing reaction of the aromatic polycarbonate prepolymer obtained in the above-mentioned process (A) with an aliphatic diol compound which is a linking agent.

(1) Aliphatic Diol Compound (Linking Agent)

The aliphatic diol compound to be used for the continuous production method of the present invention is a diol compound having aliphatic hydrocarbon groups binding to the terminal hydroxy groups. The term "terminal hydroxy group" means a hydroxy group that contributes to form a carbonate bond between the aliphatic diol compound and the aromatic polycarbonate prepolymer by transesterification reaction.

Examples of the aliphatic hydrocarbon groups include an alkylene group and a cycloalkylene group which may be substituted in part by aromatic groups, heterocyclic ring-containing groups or the like.

More precise examples of the aliphatic diol compounds include a dihydric compound having alcoholic hydroxy groups represented by the following general formula (A):

[Chemical Formula 6]

$$\mathbf{HO\text{-}(CR_1R_2)_n\text{-}Q\text{-}(CR_3R_4)_m\text{-}OH \cdots \qquad (A)}$$

In the above general formula (A), "Q" represents a hydrocarbon group having at least 3 carbon atoms which may contain atoms of a different kind. The lower limit of the carbon number of said hydrocarbon group is 3, preferably 6 and more preferably 10, and the upper limit thereof is preferably 40, more preferably 30 and most preferably 25.

Examples of the atoms of a different kind include an oxygen atom (O), a sulfur atom (S), a nitrogen atom (N), a fluorine atom (F) and a silicon atom (Si). Among them, an oxygen atom (O) and a sulfur atom (S) are most preferable.

The hydrocarbon group can be strait chain (linear), branched or circular. "Q" can contain a cyclic structure such as an aromatic ring and a heterocyclic ring.

In the above general formula (A), $R_1$, $R_2$, $R_3$ and $R_4$ each independently represent a group selected from the group consisting of a hydrogen atom, an aliphatic hydrocarbon group having 1-30 carbon atoms, preferably 1-10 carbon atoms, and an aromatic hydrocarbon group having 6-20 carbon atoms, preferably 6-10 carbon atoms.

Examples of the aliphatic hydrocarbon groups include a linear or branched alkyl group and a cycloalkyl group. Examples of the alkyl groups include a methyl group, an ethyl group, a propyl group, an isopropyl group, a n-butyl group, an i-butyl group, a t-butyl group, a n-amyl group, an isoamyl group, an-hexyl group, and an isohexyl group. Examples of the aromatic hydrocarbon groups include a phenyl group and a naphthyl group.

In this regard, at least one of $R_1$ and $R_2$ and at least one of $R_3$ and $R_4$ are each independently selected from the group consisting of a hydrogen atom and an aliphatic hydrocarbon group.

It is most preferable that $R_1$, $R_2$, $R_3$ and $R_4$ are all hydrogen atoms. That is, the aliphatic diol compound to be used for the present invention is preferably a primary diol compound, more preferably a primary diol compound except a linear aliphatic diol compound.

In the general formula (A), "n" and "m" each independently represent an integer of 0-10, preferably an integer of 0-4.

In the case that Q contains no aliphatic hydrocarbon groups binding to the terminal hydroxy groups, "n" and "m" each independently represent an integer of 1-10, preferably an integer of 1-4.

More preferable examples of the aliphatic diol compounds include dihydric compounds having alcoholic hydroxy groups represented by the following formulas (i) to (iii):

[Chemical Formula 7]

$$HO\text{-}(CR_1R_2)_{n1}\text{-}Q_1\text{-}(CR_3R_4)_{m1}\text{-}OH \cdots \qquad (i)$$

$$HO\text{-}(CR_1R_2)_{n2}\text{-}Q_2\text{-}(CR_3R_4)_{m2}\text{-}OH \cdots \qquad (ii)$$

$$HO\text{-}(CR_1R_2)_{n3}\text{-}Q_3\text{-}(CR_3R_4)_{m3}\text{-}OH \cdots \qquad (iii)$$

In the above formula (i), $Q_1$ represents a hydrocarbon group having 6-40 carbon atoms containing aromatic ring (s), preferably a hydrocarbon group having 6-30 carbon atoms containing aromatic ring(s). $Q_1$ can contain at least

one atom of a different kind selected from the group consisting of an oxygen atom (O), a sulfur atom (S), a nitrogen atom (N), a fluorine atom (F) and a silicon atom (Si).

In the formula (i), "n1" and "m1" each independently represent an integer of 1-10, preferably an integer of 1-4.

Examples of the aromatic rings include a phenyl group, a biphenyl group, a fluorenyl group and a naphthyl group.

In the above formula (ii), $Q_2$ represents a linear or branched hydrocarbon group having 3-40 carbon atoms which may contain heterocyclic ring(s), preferably a linear or branched hydrocarbon group having 3-30 carbon atoms which may contain heterocyclic ring(s). $Q_2$ can contain at least one atom of a different kind selected from the group consisting of an oxygen atom (O), a sulfur atom (S), a nitrogen atom (N), a fluorine atom (F) and a silicon atom (Si) . "n2" and "m2" each independently represent an integer of 1-10, preferably an integer of 1-4.

In the above formula (iii), $Q_3$ represents a cyclic hydrocarbon group or a cycloalkylene group having 6-40 carbon atoms, preferably having 6-30 carbon atoms. "n3" and "m3" each independently represent an integer of 0-10, preferably an integer of 1-4. Examples of the cycloalkylene groups include a cyclohexylene group, a bicyclodecanyl group and a tricyclodecanyl group.

In the above formulas (i) to (iii) , $R_1$, $R_2$, $R_3$ and $R_4$ each independently represent a group selected from the group consisting of a hydrogen atom, an aliphatic hydrocarbon group having 1-30 carbon atoms, preferably 1-10 carbon atoms, and an aromatic hydrocarbon group having 6-20 carbon atoms, preferably 6-10 carbon atoms. Examples of $R_1$ to $R_4$ are same as those in the above-mentioned general formula (I).

Among the aliphatic diol compounds represented by any one of the formulas (i) to (iii), it is more preferable to use a compound represented by the formulas (i) or (iii). It is most preferable to use a compound represented by the formula (i).

Considering that the by-product aromatic monohydroxy compound accompanied by reaction of the aromatic polycarbonate prepolymer with the aliphatic diol compound is to be distilled out of the reaction system, it is preferable that the aliphatic diol compound to be used has a higher boiling point than that of said aromatic monohydroxy compound. In addition, since it is required to progress the reaction reliably under a constant temperature and pressure without volatilizing the materials, it is more preferable to use an aliphatic diol compound having an even higher boiling point. Therefore, examples of the aliphatic diol compounds to be used for the present invention include an aliphatic diol compound having a boiling point at normal pressure of 240°C or higher, preferably 250°C or higher, more preferably 300°C or higher, most preferably 350°C or higher. The upper limit of the boiling point is not limited and it is sufficient to have a boiling point of 500°C or less.

Using an aliphatic diol compound having a relatively high boiling point enables to employ the method of the present invention comprising feeding the aliphatic diol compound continuously to the linking and highly-polymerizing reactor under reduced pressure of 1333 Pa (10 torr) or less and to inhibit volatilizing the aliphatic diol compound during the production process. Thereby, the rate of the aliphatic diol compound contributing to the linking and highly-polymerizing reaction can be increased and the substantial amount of the aliphatic diol compound to be used can be reduced to enhance economical efficiency.

Employable examples of the aliphatic diol compounds of the present invention can be categorized into primary diols and secondary diols as follows:

(i) Primary Diols; 2-Hydroxyethoxy Group-Containing Compounds

Preferable examples of the aliphatic diol compounds of the present invention include a 2-hydroxyethoxy group-containing compound represented by [HO-$(CH_2)_2$-O-Y-O-$(CH_2)_2$-OH], wherein "Y" is selected from the groups consisting of an organic group represented by the following structure (A), an organic group represented by the following structure (B), an organic group represented by the following structure (C) which is a divalent phenylene group or naphthylene group and a cycloalkylene group represented by the following structure (D):

[Chemical Formula 8]

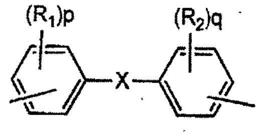

· · · (A)

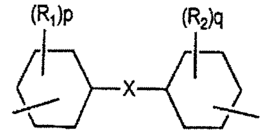

· · · (B)

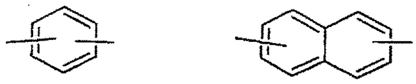

· · · (C)

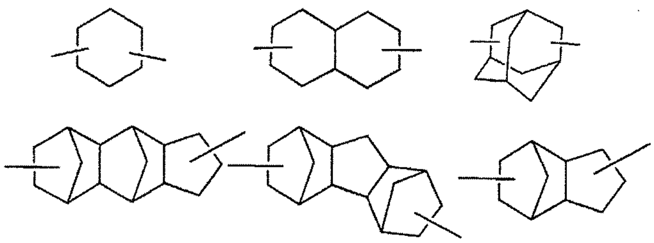

· · · (D)

In the above structural formulas, X represents a single bond or a group having the structures shown below. $R_1$ and $R_2$ each independently represent a hydrogen atom, an alkyl group having 1-4 carbon atoms, a phenyl group or a cycloalkyl group, which may contain a fluorine atom. Preferable examples of $R_1$ and $R_2$ include a hydrogen atom and a methyl group. "p" and "q" each independently represent an integer of 0-4, preferably 0-3.

[Chemical Formula 9]

X :

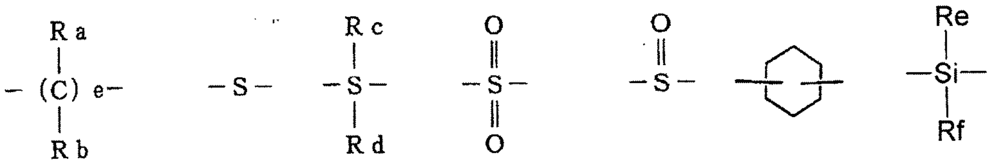

In the above structures, Ra and Rb each independently represent a hydrogen atom, a linear or branched alkyl group having 1-30, preferably 1-12, more preferably 1-6, most preferably 1-4 carbon atoms, an aryl group having 6-12 carbon atoms or a cycloalkyl group having 6-12 carbon atoms. Ra and Rb can be linked with each other to form a ring. The ring includes an aromatic ring, an alicyclic ring, a heterocyclic ring containing O and/or S, and arbitrary combinations of them.

When Ra and Rb are an alkyl group or are linked with each other to form a ring, they can contain fluorine atoms.

Rc and Rd each independently represent an alkyl group having 1-10, preferably 1-6, more preferably 1-4 carbon atoms, which may contain a fluorine atom. Preferably, Rc and Rd are a methyl group or an ethyl group. "e" represents an integer of 1-20, preferably 1-12.

More specific examples of the aliphatic diol compounds are shown below. In the formulas shown below, "n" and "m" each independently represent an integer of 0-4. $R_1$ and $R_2$ each independently represent a hydrogen atom, a methyl group, an ethyl group, a n-propyl group, an isopropyl group, a butyl group, an isobutyl group, a phenyl group or a cyclohexyl group.

<Y: Organic Group (A)>

Preferable examples of the aliphatic diol compounds in the case that Y is the organic group represented by the above structure (A) are shown below.

[Chemical Formula 10]

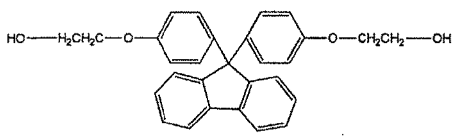
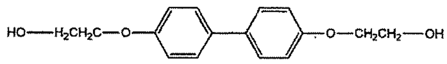
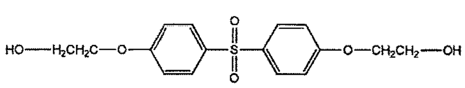
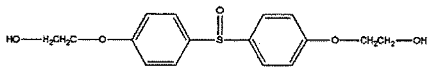
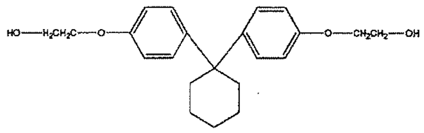
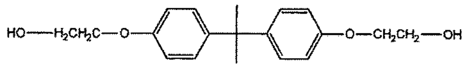
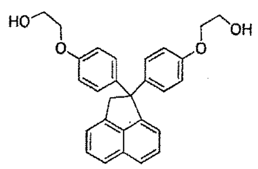
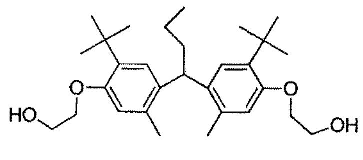
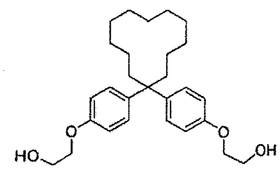
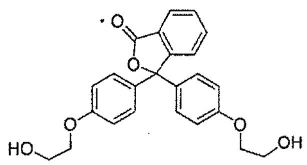
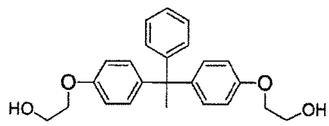
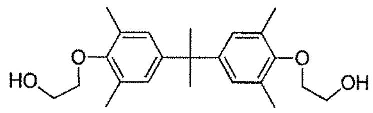
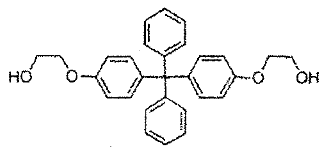
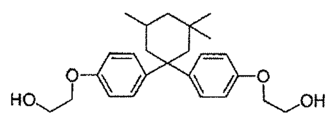
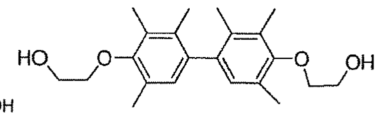
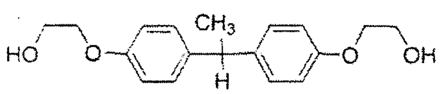
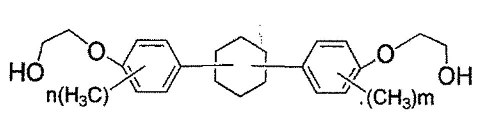
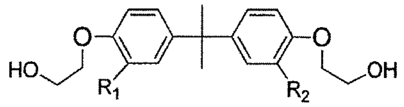
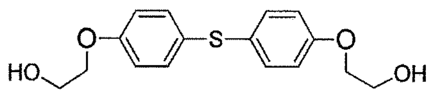

<Y: Organic Group (B)>

In the case that Y is the above-mentioned organic group represented by the above structure (B), X in the

structure (B) is preferably represented by [-CRaRb-] wherein Ra and Rb each independently represent a hydrogen atom or an alkyl group having 1-6 carbon atoms, preferably a methyl group. Examples of this type of aliphatic diol compounds are shown below.

[Chemical Formula 11]

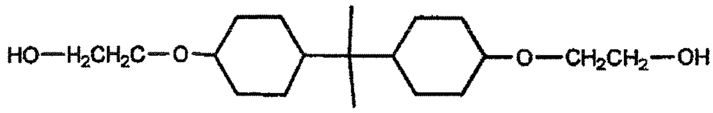

<Y: Organic Group (C)>

Preferable examples of the aliphatic diol compounds in the case that Y is the organic group represented by the above structure (C) are shown below.

[Chemical Formula 12]

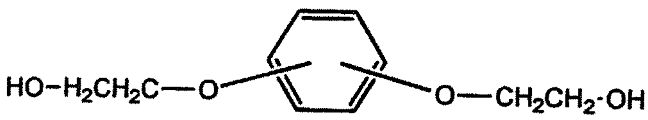

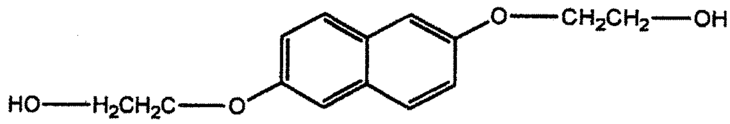

Most preferable compounds among the above-shown 2-hydroxyethoxy group-containing compounds are shown below.

[Chemical Formula 13]

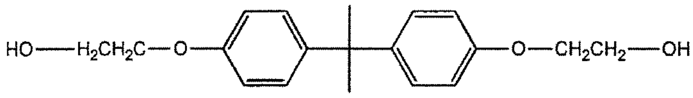

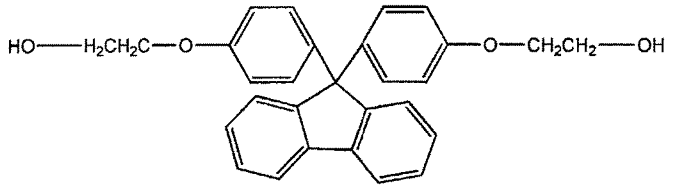

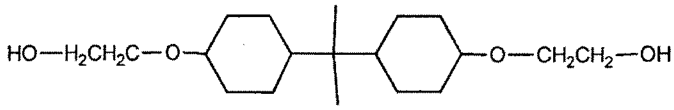

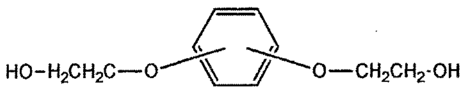

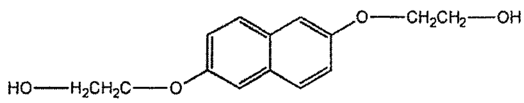

(ii) Primary Diols; Hydroxyalkyl Group-Containing Compounds

Preferable examples of the aliphatic diol compounds of the present invention include a hydroxyalkyl group-containing compound represented by [$HO-(CH_2)_r-Z-(CH_2)_r-OH$], wherein "r" is an integer of 1 or 2. That is, preferable hydroxyalkyl groups include a hydroxymethyl group and a hydroxyethyl group.

Examples of "Z" include organic groups shown below.

[Chemical Formula 14]

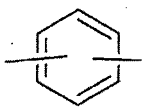

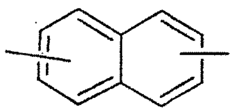

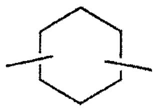

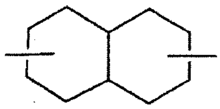

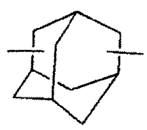

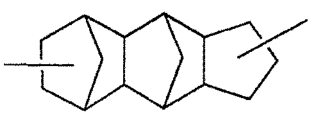

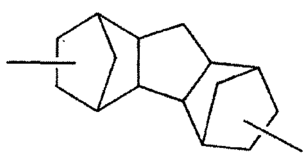

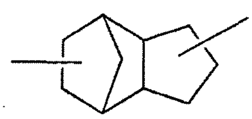

Preferable examples of the hydroxyalkyl group-containing compounds are shown below, wherein "n" and "m" each independently represent an integer of 0-4.

[Chemical Formula 15]

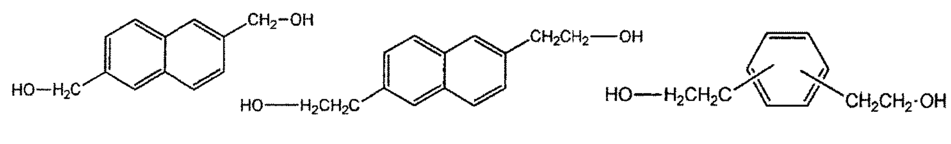

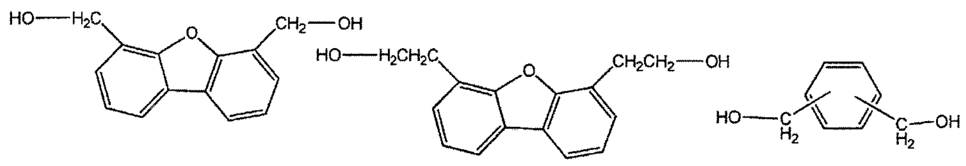

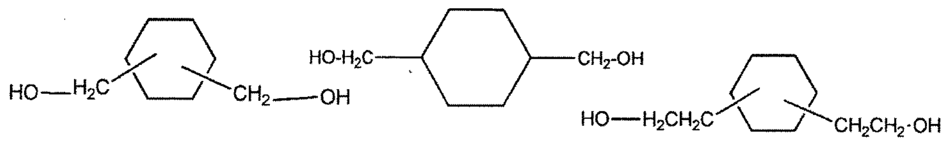

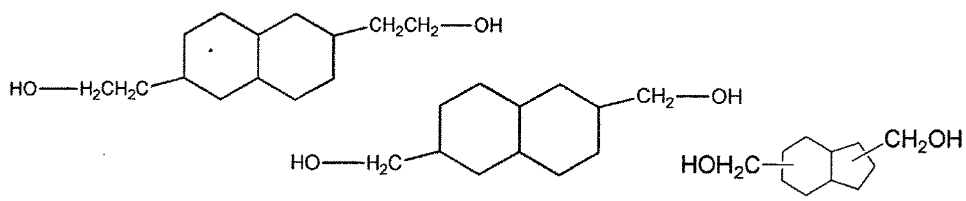

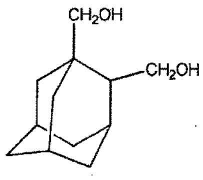
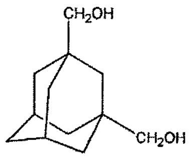
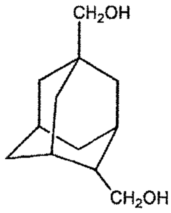
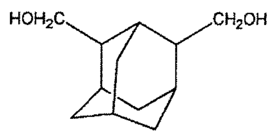

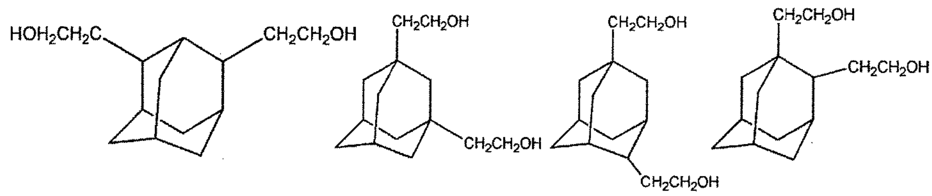

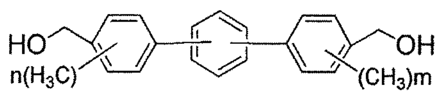
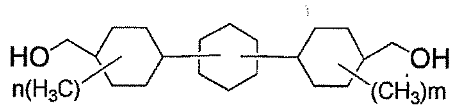

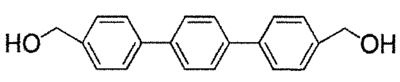
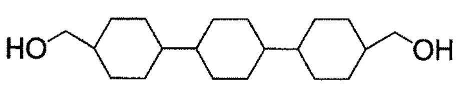

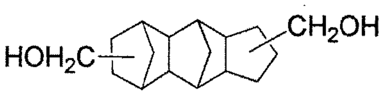
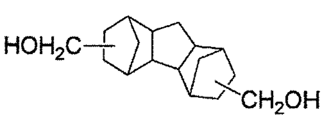
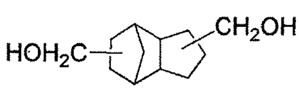

(iii) Primary Diols; Carbonate Diol Compounds

Preferable examples of the aliphatic diol compounds of the present invention also include a carbonate diol compound represented by the following structures, wherein R represents an organic group shown below, "n" represents

an integer of 1-20, preferably 1-2 and "m" represents an integer of 3-20, preferably 3-10:

[Chemical Formula 16]

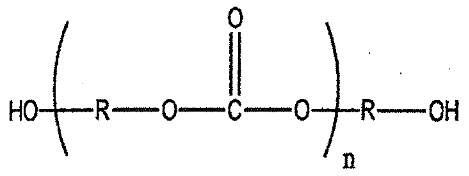

R = 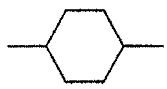 $-(CH_2)_m-$ $m = 3 \sim 20$ 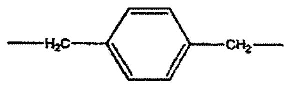

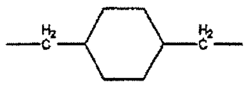 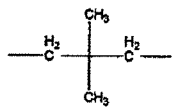 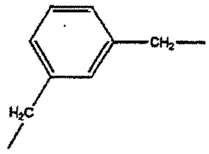 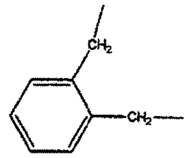

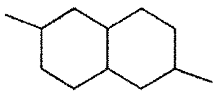 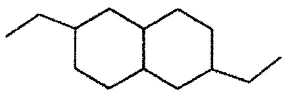

Preferable examples of the above-mentioned carbonate diol compounds include the following diols, especially cyclohexanedimethanol or a neopentylglycol dimer, or a mixture including them as a principal component.

[Chemical Formula 17]

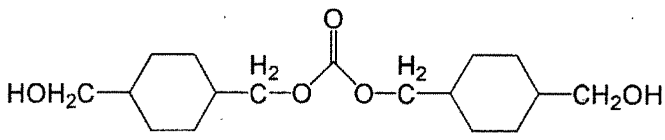

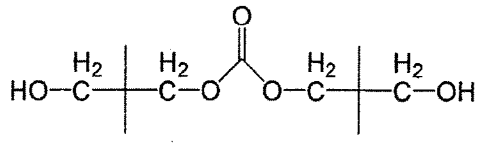

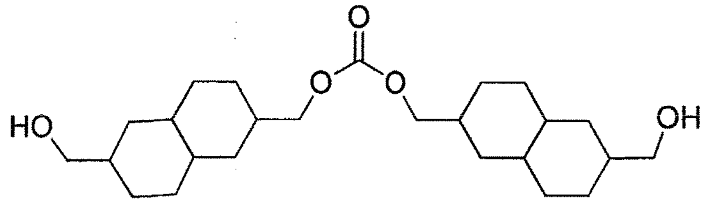

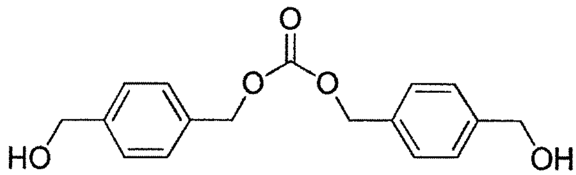

It is preferable to use a primary diol selected from the group consisting of (i) a 2-hydroxyethoxy group-containing compound, (ii) a hydroxyalkyl group-containing compound and (iii) a carbonate diol compound as the aliphatic diol compound to be used for the present invention.

The aliphatic diol compound to be used for the present invention should not be limited to the above-mentioned compounds. Employable examples of the aliphatic diol compounds remain among primary diols other than the above-mentioned primary diols or among secondary diols. Employable examples of the other primary diols or secondary diols are shown below.

In the structural formulas below, $R_1$ and $R_2$ each independently represent an hydrogen atom, a halogen atom, an amino group, a nitro group, an alkyl group having 1-20 carbon atoms, an alkoxy group having 1-20 carbon atoms, a cycloalkyl group having 6-20 carbon atoms, an aryl group having 6-20 carbon atoms, a cycloalkoxyl group having 6-20 carbon atoms and an aryloxy group having 6-20 carbon atoms. Preferable examples of $R_1$ and $R_2$ are a hydrogen atom, a fluorine atom, a methyl group, an ethyl group, a n-propyl group, an i-propyl group, a n-butyl group, an i-butyl group, a sec-butyl group, a tert-butyl group, a pentyl group, an isoamyl group, a cyclohexyl group, a phenyl group, a benzyl group, a methoxy group, or an ethoxy group.

$R_5$, $R_6$, $R_7$ and $R_8$ each independently represent a hydrogen atom or a monovalent alkyl group having 1-10 carbon atoms, $R_9$ and $R_{10}$ each independently represent a linear or branched alkyl group having 1-8, preferably 1-4 carbon atoms.

Ra and Rb each independently represent an hydrogen atom, a halogen atom, a linear or branched alkyl group having 1-30 carbon atoms which may contain halogen atoms or oxygen atoms, a cycloalkyl group having 1-30 carbon atoms which may contain halogen atoms or oxygen atoms, an aryl group having 6-30 carbon atoms which may contain halogen atoms or oxygen atoms, or an alkoxy group having 1-15 carbon atoms which may contain halogen atoms. Ra and Rb can be linked with each other to form a ring.

R' represents an alkylene group having 1-10, preferably 1-8 carbon atoms, Re and Rf each independently represent a hydrogen atom, a methyl group, an ethyl group, a n-propyl group, an isopropyl group, a butyl group, an isobutyl group or a phenyl group, "m'" represents an integer of 4-20, preferably 4-12, "m''" represents an integer of 1-10, preferably 1-5 and "e" represents an integer of 1-10.

<Other Primary Diols>

[Chemical Formula 18]

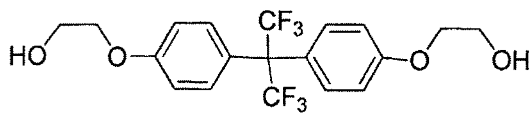
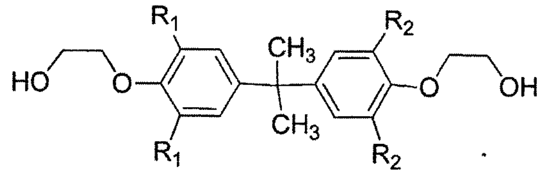
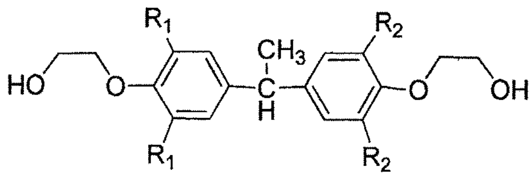
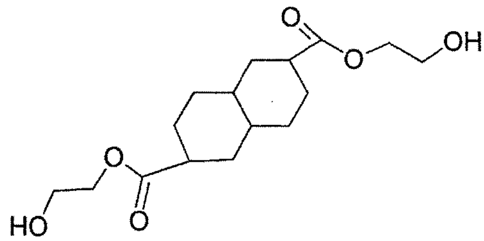
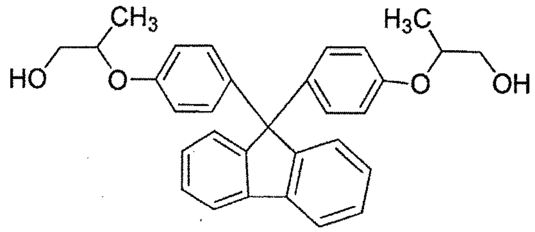
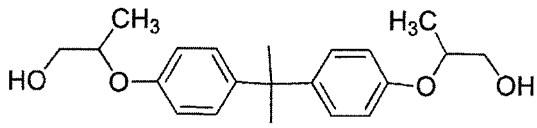
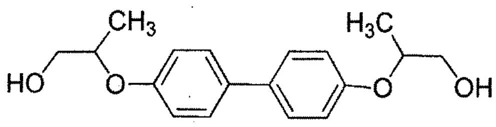
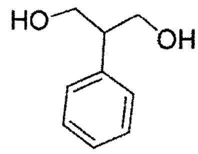
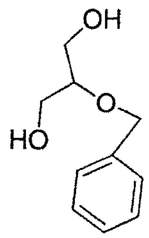
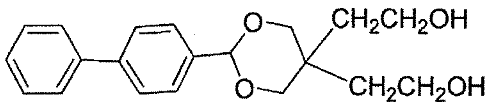
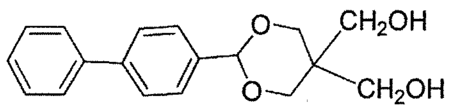
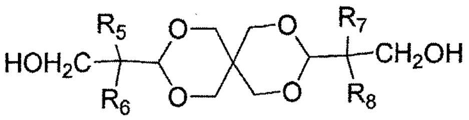
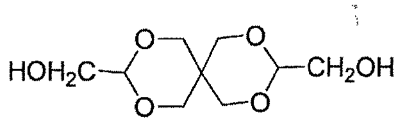
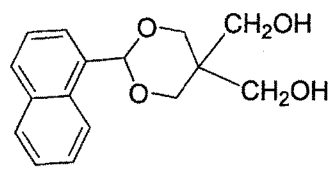
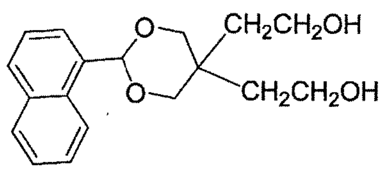

[Chemical Formula 19]

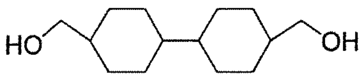
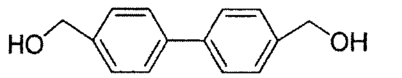
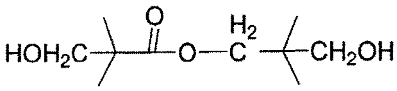
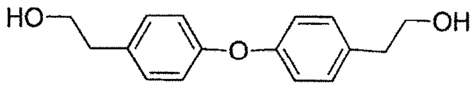
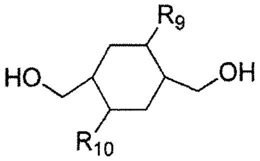
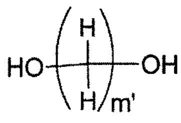
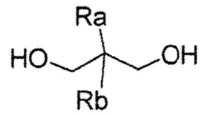
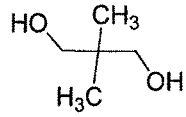
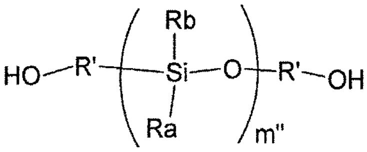
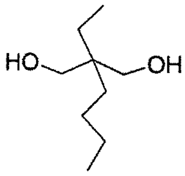
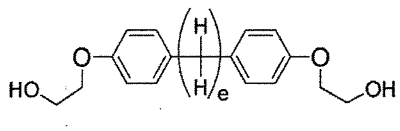
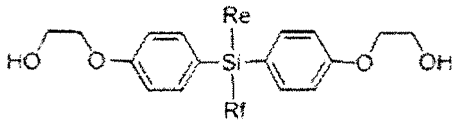

<Secondary Diols>

[Chemical Formula 20]

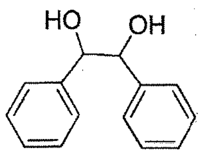
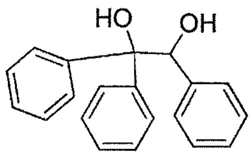
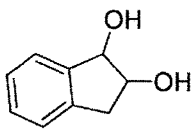
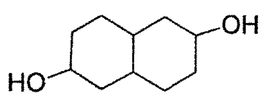
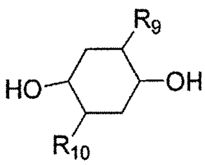
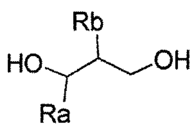
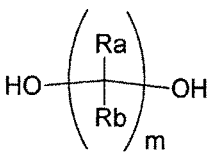
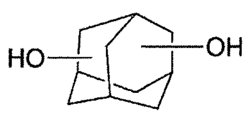
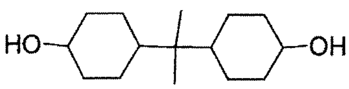
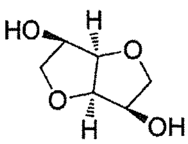
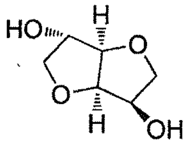
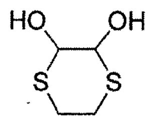
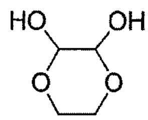

The above aliphatic diol compounds can be used independently, or two or more of them can be used in combination with each other. The aliphatic diol compound to be used actually can be selected in accordance with the reaction conditions employed or the like, since available compound species may vary depending on the reaction conditions or the like.

The amount of the aliphatic diol compound to be used according to the present invention is preferably 0.01 to 1.0 mol, more preferably 0.1 to 1.0 mol, further preferably 0.1 to 0.5 mol, most preferably 0.2 to 0.7 mol per mole of the

total amount of the terminal groups of the aromatic polycarbonate prepolymer.

According to the method of the present invention, that is, the feed amount per unit time of the aliphatic diol compound to be fed continuously to the linking and highly-polymerizing reactor is preferably 0.01-1.0 times (molar ratio), more preferably 0.1-1.0 times (molar ratio), further preferably 0.1-0.5 times (molar ratio), most preferably 0.2 -0.4 times (molar ratio) based upon the total amount of terminal groups of the feed amount per unit time of the aromatic polycarbonate prepolymer to be fed continuously to the linking and highly-polymerizing reactor.

In this regard, considering "M" represented by the following mathematical formula which represents a mole number of terminal groups of the aromatic polycarbonate prepolymer per mole of the aliphatic diol compound, "M" is preferably 100-1.0, more preferably 10-1.0, further preferably 10-2.0, most preferably 5.0-2.5.

[Mathematical Formula 3]

$$M=M2/M1,$$

wherein M1 (mol) representing the feed amount per unit time of the aliphatic diol compound and M2 (mol) representing the total amount of terminal groups of the feed amount per unit time of the aromatic polycarbonate prepolymer.

According to the continuous production method of the present invention, the ratio of feed amounts (molar ratio) of the aromatic polycarbonate prepolymer and the aliphatic diol compound preferably has a certain degree of stability within the above range.

When the amount of the aliphatic diol compound to be used is too large beyond the above range, insertion reaction wherein the aliphatic diol compound is inserted into the main chain of the aromatic polycarbonate resin as a copolymerizing component might occur, which might cause a serious influence by the copolymerization on the polymer properties because of the increase in the copolymerization ratio. Though it may enable the modification of polymer properties, it would not be preferable in terms of the effect of highly polymerization of the aromatic polycarbonate.

When the amount of the aliphatic diol compound to be used is too small beyond the above range, highly polymerization might be ineffective which would not be preferable.

(2) Regulating of Aliphatic Diol Compound

When feeding or transferring the aliphatic diol compound into the linking and highly-polymerizing reactor, it is preferable to melt the aliphatic diol compound into a liquid form in advance in a linking agent melting device. In this case, it is preferable to make the viscosity of the aliphatic diol compound 0.1-10,000 poise, more preferably 1-100 poise. Adjusting the viscosity of the aliphatic diol compound to the above range enables a stable and quantitative feed to the linking and highly-polymerizing reactor and a quick and homogeneous reaction with the aromatic polycarbonate prepolymer.

In addition, it is preferable to dehydrate the aliphatic diol compound in a melt state in advance before feeding to the linking and highly-polymerizing reactor. Dehydration is carried out preferably under reduced pressure in the range of 0.01 torr (1.3 Pa) to 300 torr (40 kPa) at a temperature in the range from the melting point of the aliphatic diol compound to said melting point + 50 ° C. While the target of the dehydration degree is not particularly limited, it is preferable to carry out dehydration so that the water content in the aliphatic diol compound after dehydration becomes 3% by weight or less, more preferably 1% by weight or less.

(3) Equipment for Process (B)

In the process (B), a linking and highly-polymerizing reactor is equipped which is connected in series to the polycondensation reactor of the process (A) or the rearmost polycondensation reactor in the case of using plural reactors in the process (A). As the linking and highly-polymerizing reactor used in the process (B), a single reactor or two or more reactors can be used. It is preferable to use a single reactor.

According to the embodiment shown in Fig.1, more precisely, one reactor which is the fifth horizontal stirred reactor 7R is equipped connecting in series to the rear stage of the fourth vertical stirred reactor 6, and the aliphatic diol compound as a linking agent is transferred from the linking agent melting apparatus 2R to feed to the fifth horizontal stirred reactor 7R. More precise conditions such as the temperature and pressure of the fifth horizontal stirred reactor 7R are typically arranged as shown below:

(Preheater 6H) 270-340°C
(The fifth horizontal stirred reactor 7R)
Inner temperature: 260-340°C, Pressure: 10 torr (1333 Pa) or less,

Temperature of heating medium: 260-340°C

It is preferable to use a metering pump to feed the aliphatic diol compound to the linking and highly-polymerizing reactor at good quantitative performance. Examples of the metering pumps include a centrifugal pump, a mixed flow pump, an axial pump, a plunger pump, a diaphragm pump, a piston pump, a gear pump, a vane pump and a screw pump.

In addition, the transferring pipe for feeding the linking agent from the metering pump to the linking and highly-polymerizing reactor is preferably equipped with a back pressure valve at a position closer to the linking and highly-polymerizing reactor rather than to the linking agent feeder, more preferably at a position within 50cm from the linking and highly-polymerizing reactor, in order to feed the compound into a reduced-pressure system, since inner pressure of the linking and highly-polymerizing reactor is reduced.

In the equipment shown in Fig.1, for example, the transferring pipe for feeding the linking agent from the metering pump 2P to the fifth horizontal stirred reactor 7R is equipped with a back pressure valve at a position closer to the reactor rather than the linking agent feeder.

In addition, the oxygen concentration in the linking and highly-polymerizing reactor is controlled preferably within the range from 0.0001 to 10 vol%, more preferably from 0.0001 to 5 vol%, in order to inhibit oxidation degradation of the aliphatic diol compound. For obtaining the above condition of oxygen concentration, it is preferable to carry out gas displacement in the reactor with gas having the oxygen concentration of 10 vol% or less and further to carry out degassing.

Examples of the linking and highly-polymerizing reactor to be used for the process (B) include a horizontal stirred reactor.

It is more preferable to use a multiaxial horizontal stirred reactor having a number of stirring axes wherein at least one of said stirring axes having a horizontal rotary shaft and stirring blades mounted approximately orthogonally on said horizontal rotary shaft which are discrete from each other, with L/D in the range from 1 to 15, preferably from 2 to 10, wherein L is the length of said horizontal rotary shaft and D is the rotation diameter of said stirring blades.

It is also preferable to use a multiaxial horizontal stirred or kneaded reactor which has a number of continuous screw type stirring axes typified by an extruder, with L/D in the range from 20 to 100, preferably from 40 to 80 wherein L is the length of said stirring axes and D is the screw diameter.

It is preferable that these horizontal stirred reactors have a feed inlet of the aromatic polycarbonate prepolymer and, on the opposite side thereof, an extract outlet of the high-molecular-weight polycarbonate resin produced. Thereby, the aromatic polycarbonate prepolymer can be reacted with the aliphatic diol compound homogeneously.

The linking and highly-polymerizing reactor can be equipped with well-known stirring devices such as a stirring blade. Examples of stirring blades include a two-axis type stirring blade, a paddle blade, a lattice blade, a spectacle-shaped blade or the like, or can be an extruder equipped with a screw.

The linking and highly-polymerizing reactor can also be equipped with an extractor. Since the high-molecular-weight polycarbonate resin or polycarbonate copolymer produced in the linking and highly-polymerizing reactor is a high-viscosity resin having fluidity of around 2500 poise at 280°C or having a melt flow rate based on JIS-K-6719 of around 2.5 g/10min and it may become difficult to extract the resin from the linking and highly-polymerizing reactor in some cases, it is preferable to use an extractor. Examples of extractors include a gear pump and a screw extractor. It is preferable to use a screw extractor.

The fifth horizontal stirred reactor 7R shown in Fig.1, for example, is equipped with a two-axis type stirring blade 7Y and a screw extractor 7P.

Each reactor can be equipped with a distillation tube for discharging by-products produced by the reactions or the like, a condenser, a condensing device such as a dry ice trap, a receiver such as a recovery tank, a decompression device for keeping intended reduced pressure or the like.

The fifth horizontal stirred reactor 7R shown in Fig.1, for example, is equipped with a distillation tube 7F. The distillation tube 7F is connected to a condenser 7C and the reactor is kept under intended reduced pressure by the decompression device 7V.

It is preferable that said horizontal stirred reactor has an extractor for extracting the polycarbonate resin produced on the opposite side of a feed inlet of the aromatic polycarbonate prepolymer. Examples of extractors include a gear pump and a screw extractor. It is preferable to use a screw extractor.

As a shaft seal of the rotary shaft, a seal mechanism including a mechanical seal can be preferably employed.

While the surface renewal capability of the linking and highly-polymerizing reactor used in the process (B) is not particularly limited, it is desired that the surface renewal efficiency represented by the following mathematical formula (II) is preferably 0.01-100, more preferably 0.01-50, most preferably 0.01-10 in order to remove the by-product aromatic hydroxy compound efficiently.

[Mathematical Formula 4]

$$\text{Surface Renewal Efficiency} = A \times Re^{0.5} \times n \div V \quad \cdots \text{(II)}$$

A: Surface Area ($m^2$)
n: Number of Rotations /s
V: Volume of Liquid ($m^3$)
Re: Reynolds Number: $Re = \rho \times n \times r^2 \div \mu$
p: Density of Liquid ($kg/m^2$)
r: Diameter of Stirring Machine (m)
$\mu$: Viscosity of Liquid (kg/m·s)

As for the material of the reactors to be used for the production method of the present invention, it is preferable that at least 90% of the total surface area of the part contacting with the starting monomers or the reaction mixture, hereinafter "wetted surface", is at least one selected from the group consisting of (a) metal having the iron content of 1% by weight or less, (b) stainless steel having the content of metal(s) selected from the group consisting of Mo, Ti, Zr and Nb of 1% by weight or more and (c) glass. In the case that the material is glass, it is further preferable to use glass having an amount of alkali metal elution at the time of dipping into 50°C pure water for 120 hours of 15 ppb/$cm^2$ or less.

It is most preferable that the wetted surfaces of all the reactors to be used for the production method of the present invention are made of the above-mentioned materials. However, it is not necessarily required that the wetted surfaces of all the reactors are made of the above-mentioned materials, and at least the wetted surface of the linking and highly-polymerizing reactor used in the process (B) is preferably made of the above-mentioned materials.

The reactors to be used for the production method of the present invention are preferably electrolytically polished in the area of at least 90% based upon total surface area of the wetted surface.

It is most preferable that the wetted surfaces of all the reactors to be used for the production method of the present invention are electrolytically polished. However, it is not necessarily required that the wetted surfaces of all the reactors are electrolytically polished, and at least the wetted surface of the linking and highly-polymerizing reactor used in the process (B) is preferably electrolytically polished.

5. Continuous Production Process

One embodiment of the continuous production method of the present invention will be described in more detail according to Fig.1.

The aromatic polycarbonate prepolymer produced in the polycondensation reactor in the process (A) or the rearmost polycondensation reactor in the case of using plural reactors in the process (A) is fed into the linking and highly-polymerizing reactor of the process (B). Meanwhile, the aliphatic diol compound which is a linking agent is melted by a linking agent melting device and is subjected to dehydration treatment under reduced pressure, and then is fed or transferred into the linking and highly-polymerizing reactor directly from a linking agent feeder.

In the production equipment shown in Fig.1, for example, the prepolymer discharged from the fourth vertical stirred reactor 6R is fed continuously to the fifth horizontal stirred reactor 7R by the gear pump 6P through preheater 6H.

Meanwhile, the linking agent is fed continuously from the feed inlet 2M to the linking agent-melting tank 2R. Subsequently, the molten linking agent is dehydrated under reduced pressure by the decompression device 2V, and then is fed continuously to the fifth horizontal stirred reactor 7R through the linking agent metering feed pump 2P. Then, the linking and highly-polymerizing reaction between the linking agent and prepolymer is carried out in the fifth horizontal stirred reactor under the appropriate conditions of temperature and pressure for conducting the linking and highly-polymerizing reaction. By-product phenol and a part of unreacted monomers are removed out of the system through a duct for vent 7F.

It is necessary to feed the aliphatic diol compound directly into the linking and highly-polymerizing reactor under high vacuum with the degree of vacuum of 10 torr (1333 Pa) or less, preferably the degree of vacuum of 2.0 torr (267 Pa) or less, more preferably the degree of vacuum of 0.01 torr (1.3 Pa) to 1 torr (133 Pa) . When the degree of vacuum at the time of feeding the aliphatic diol compound to the linking and highly-polymerizing reactor is insufficient, cleavage reaction of main chain of the prepolymer by by-product such as phenol might progress and it might be necessary to extend the retention time of reaction mixture in order to achieve high molecular weight.

It is preferable to feed the aliphatic diol compound to the linking and highly-polymerizing reactor by protruding the feeding tube into the linking and highly-polymerizing reactor and injecting the compound into the resin or reaction mixture or dropping or spraying the compound onto the fluid level of the resin or reaction mixture. Thereby, the aliphatic diol compound can be fed to the linking and highly-polymerizing reactor homogeneously. It is preferable that the linking and highly-polymerizing reactor has a number of feeding tubes for feeding the aliphatic diol compound to carry out homogeneous and quantitative feed.

As for equipment such as feed lines, valves and pumps for the aliphatic diol compound, it is preferable to use a double tube and jacket type equipment wherein the aliphatic diol compound flows on the inner side and heat medium flows on the outer side, more preferably to use equipment such as a fully jacket type valve or pump.

In the process (B), the retention time of the reaction mixture in the linking and highly-polymerizing reactor which is the time from feeding the aliphatic diol compound to react with the aromatic polycarbonate prepolymer to extracting the high-molecular-weight polycarbonate resin produced is, though not be able to determine uniformly because of the tendency to depend on the reaction apparatus used, preferably 60 minutes or less, more preferably 1 to 60 minutes, more preferably 5 to 60 minutes, most preferably 10 to 45 minutes.

According to the method of the present invention which is a method for a continuous production of a high-molecular-weight polycarbonate resin by feeding the aromatic polycarbonate prepolymer and the aliphatic diol compound continuously to the linking and highly-polymerizing reactor to conduct the linking and highly-polymerizing reaction, by feeding the aliphatic diol compound directly to the linking and highly-polymerizing reactor under extremely high vacuum of the degree of vacuum of 10 torr (1333 Pa) or less, the retention time of the reaction mixture in the linking and highly-polymerizing reactor can be shortened. When the retention time of the reaction mixture is too long, problems might be occurred such that coloration might occur which might cause deterioration of hue, branching structures might be increased which might cause the increase of N-value or gelation, and different kind structures might be increased, which might cause deterioration in qualities of the high-molecular-weight polycarbonate resin thus produced.

There is a tendency that the preferred retention time of the reaction mixture in a reactor depends on the reactor, particularly on the surface renewal capability.

According to the method of the present invention, by using a reactor having the above-mentioned surface renewal efficiency of 10 or less, the retention time can be 60 minutes or less, more preferably 1 to 60 minutes, further preferably 5 to 60 minutes, most preferably 10 to 45 minutes. Therefore, the most preferable embodiment includes carrying out the method of the present invention using a reactor having the surface renewal efficiency of 10 or less.

Regarding more precise embodiment of preferred conditions according to the method of the present invention, in the case that the reaction temperature is 280°C, the degree of vacuum is 1 torr or less and the retention time is 10 to 60 minutes. In the case that the reaction time is 300°C, the degree of vacuum is 2.5 torr or less and the retention time is 5 to 30 minutes. In the case that the reaction time is 320°C, the degree of vacuum is 3.0 torr or less and the retention time is 1 to 20 minutes.

The retention time can be controlled by adjusting the feeding amounts of the aromatic polycarbonate prepolymer and the aliphatic diol compound and the discharging amount of the aromatic polycarbonate resin produced.

The reaction conditions in the process (B) is set so as to ensure a high surface renewal capability by selecting an appropriate polymerization apparatus and stirring blades at a high temperature under high vacuum.

The reaction temperature in the linking and highly-polymerizing reactor in the process (B) is normally 270-340°C, preferably 280-320°C. The reaction pressure is 10 torr (1333 Pa) or less, preferably 2.0 torr (267 Pa) or less, more preferably 0.01-1.5 torr (1.3-200 Pa), further preferably 0.01-1.0 torr (1.3-133 Pa). Therefore, it is preferable to use a seal mechanism containing a mechanical seal for a stirring shaft.

In the process (B), it is preferable to control the liquid level so that the average retention time of the reaction mixture in the linking and highly-polymerizing reactor becomes 60 minutes or less, more preferably 5 to 60 minutes, further preferably 10 to 45 minutes.

In the production apparatus shown in Fig.1, by-products such as phenol is condensed and recovered continuously from the condensers 3C and 4C mounted on the first vertical stirred reactor 3R and the second vertical stirred reactor 4R respectively. It is preferable the condensers 3C and 4C are further separate into two or more condensers respectively and a part or the whole of distillates condensed by the nearest condensers to the reactor are recirculated to the first vertical stirred reactor 3R and the second vertical stirred reactor 4R respectively, so that the molar ratio of starting materials can be controlled easily. A cold trap (not shown in Fig.1) is equipped on the downstream position of the condensers 5C, 6C and 7C mounted on the third vertical stirred reactor 5R, the fourth vertical stirred reactor 6R and the fifth horizontal stirred reactor 7R respectively, so that by-products are solidified and recovered continuously.

As mentioned above, according to the production process shown in Fig.1, after the inner temperature and pressure of the five reactors are reached to the intended values, the melt mixture of raw materials and catalyst are fed continuously into the reactors through preheaters and melt polycondensation based on transesterification reaction is initiated. Therefore, the average retention time of polymerization reaction solution in each reactor reaches to the same time as that in normal operation immediately after initiating the melt polycondensation.

In addition, since the low-molecular weight prepolymers are linked with each other by the aliphatic diol compound having high rate of transesterification reaction to be highly-polymerized in short time, the high-molecular-weight polycarbonate resin can be produced without being subjected to heat hysteresis more than necessary and without being branched easily. Moreover, the polycarbonate resin thus produced is excellent in the color tone.

Examples of the characteristics of the method of the present invention include a short time to reach high molecular weight from initiating the reaction with the aliphatic diol compound in the process (B). For example, during

the short retention time of the present invention, the weight-average molecular weight (Mw) per minute of the retention time can be increased by 500 or more, preferably 600 or more, more preferably 700 or more.

According to the present invention in more detail, the weight-average molecular weight of the high-molecular-weight polycarbonate resin obtained by the process (B) ("$Mw_{hp}$"), the weight-average molecular weight of the aromatic polycarbonate prepolymer obtained by the process (A) ("$Mw_{pp}$") and the retention time ("RT"; min) of the reaction mixture in the linking and highly-polymerizing reactor are represented by the following mathematical formula (IV) wherein k' which represents the increased amount of the weight-average molecular weight per minute is preferably 500 or more, more preferably 600 or more, further preferably 700 or more, most preferably 800 or more.

[Mathematical Formula 5]

$$k' = (Mw_{hp} - Mw_{pp}) / RT \quad \cdots (IV)$$

According to the present invention, as mentioned above, it is possible to make k' in the above mathematical formula (IV) 500 or more, more preferably 600 or more, further preferably 700 or more, most preferably 800 or more. That is, it is possible to increase the molecular weight in short time after initiating the reaction in the process (B) to achieve an intended high molecular weight.

The weight-average molecular weight (Mw) of the high-molecular-weight polycarbonate resin produced by the continuous production method of the present invention is preferably 30,000 to 100,000, more preferably 30,000 to 80,000, further preferably 35,000 to 75,000, most preferably 40,000 to 65,000.

The polycarbonate resin having a high molecular weight has a high melt tension and is less likely to cause drawdown. Therefore, it is suitable for molding such as blow molding and extrusion molding. Furthermore, it is also excellent in injection moldability because of causing no stringing or the like.

The high-molecular-weight polycarbonate resin of the present invention has high fluidity while being highly polymerized, and has Q-value (280°C, 160kg load) which is an index of fluidity in the range preferably from 0.02 to 1.0 ml/s, more preferably in the range from 0.03 to 0.5 ml/s.

In general, melting properties of a polycarbonate resin can be represented by "$Q=K \cdot P^N$", wherein Q-value represents an outflow rate of a molten resin (ml/sec), "K" represents a segment of regression equation formula which is an independent variable depending on a molecular weight and/or structure of the polycarbonate resin, "P" represents a pressure value measured by a Koka type flow tester at 280°C (load: 10-160 kgf) ($kg/cm^2$), N-value represents a structural viscosity index.

When Q-value is high and fluidity is high, moldability of injection molding of precision components, thin components or the like would be excellent.

The high-molecular-weight polycarbonate resin of the present invention has a structural viscosity index (N-value) represented by the following mathematical formula (I) of preferably 1.30 or less, more preferably 1.28 or less, further preferably 1.25 or less, most preferably 1.23 or less:

[Mathematical Formula 6]

$$\text{N-value} = (\log(Q160) - \log(Q10)) / (\log 160 - \log 10) \quad \cdots (I)$$

In the above mathematical formula (I), Q160 represents a melting fluid volume per unit time (ml/sec) measured under the conditions of 280°C and 160kg load.

Q10 represents a melting fluid volume per unit time (ml/sec) measured under the conditions of 280°C and 10kg load.

In the present invention, Q160 and Q10 are measured by using a measuring apparatus manufactured by Shimadzu Corporation, trade name "CFT-500D". The stroke is 7.0-10.0 mm. The nozzle size is 1mm (diameter) × 10mm (length).

The structural viscosity index (N-value) is an index of a branching degree of an aromatic polycarbonate resin. The high-molecular-weight polycarbonate resin of the present invention has low N-value, which means that the content of a branching structure is low and the content of a linear or straight chain structure is high.

In the case of conventional polycarbonate resins having the same Mw, it has a tendency that the fluidity becomes high and the Q-value becomes high when the content of a branching structure or the N-value is increased. In the case of the polycarbonate copolymer of the present invention, on the other hand, high fluidity or high Q-value can be achieved while keeping the N-value low.

According to the method of the present invention which is a method for a continuous production of a high-molecular-weight polycarbonate resin by feeding the aromatic polycarbonate prepolymer and the aliphatic diol compound continuously to the linking and highly-polymerizing reactor to carry out a linking and highly-polymerizing reaction, by

feeding the aliphatic diol compound directly to the linking and highly-polymerizing reactor under extremely high vacuum of the degree of vacuum of 10 torr (1333 Pa) or less, the retention time of the reaction mixture in the linking and highly-polymerizing reactor can be shortened and highly polymerization can be achieved efficiently, which enables to produce a high-molecular-weight polycarbonate resin having low N-value, excellent color tone and a low content of different kind structures.

**Examples**

The present invention will be described in more detail below, referring to examples, which are not intended to limit the scope of the present invention.

The measurement values of the examples and comparative examples below were measured by using the following methods and/or devices:

1) Weight-average molecular weight (Mw) and number-average molecular weight (Mn) in terms of polystyrene:

GPC analysis was carried out by using chloroform as a developing solvent. An analytical curve was prepared using a standard polystyrene having a known molecular weight (molecular weight distribution = 1) . A calibration curve was prepared by plotting dissolution time and molecular weight of each peak of the standard polystyrene and using a method of three-dimensional approximation. Mw and Mn were calculated by the following calculating formulae:

[Mathematical Formula 7]

$$Mw = \Sigma P_1 \div \Sigma P_0$$

$$Mn = \Sigma P_0 \div \Sigma P_2$$

wherein $P_0$ represents {"a strength of the signal of Refractive Index (hereinafter, "RI") detector"}, $P_1$ represents { "a strength of the signal of RI detector" × "Molecular Weight"}, and $P_2$ represents {"a strength of the signal of RI detector" ÷ "Molecular Weight"}, and "Molecular Weight" represents a molecular weight of polystyrene at the same dissolution time on the calibration curve.

[Measurement Conditions]

Apparatus: Trade Name "HLC-8320GPC" manufactured by TOSOH Corporation
Column: Guard Column: TSKguardcolumn Super MPHZ-M × 1
Analytical Column: TSKgel Super Multipore HZ-M × 3
Medium: HPLC grade chloroform
Injected Amount: 10 μL
Concentration: 0.2 w/v% in an HPLC grade chloroform solution
Solvent Flow Rate: 0.35ml/min
Measured Temperature: 40°C
Detector: RI (Refractive Index)

2) Total amount of terminal groups of polymer:

0.25g of a polymer sample was dissolved into 5ml of deuterated chloroform and then the amount of the terminals was measured at 23°C by using a nuclear magnetic resonance 1H-NMR spectrometer, trade name "LA-500", manufactured by JEOL Ltd. The result was shown as a mol number per ton of polymer.

3) Concentration of terminal hydroxy groups (ppm):

Concentration of terminal hydroxy groups was measured by UV/visible spectroscopy (546 nm) of a complex formed from the polymer and titanium tetrachloride in a methylene chloride solution, or by observing terminal hydroxy groups from the result of $^1$H-NMR analysis.

4) Concentration of terminal phenyl groups (mol%):

Calculated by the following mathematical formula from the result of $^1$H-NMR analysis:

[Mathematical Formula 8]

$$\text{Conc. Terminal Ph (mol\%)} = (X \div 2)/[(X \div 2)+(Y \div 8)] \times 100$$

| | |
|---|---|
| *Conc. Terminal Ph: | Concentration of terminal phenyl groups |
| *X: | H-area ratio of terminal phenyl groups |
| *Y: | H-area ratio of phenyl groups |

5) Color of polymer (YI value):

6g of a polymer sample was dissolved into 60ml of methylene chloride and then YI value was measured in a cell having an optical path length of 5 cm by using a spectroscopy colorimeter manufactured by NIPPON DENSHOKU INDUSTRIES CO.,LTD, trade name "SE-2000".

6) N-value:

A sample of aromatic polycarbonate dried at 130°C for 5 hours was subjected to a measurement using a Koka type flow tester manufactured by Shimadzu Corporation, trade name "CFT-500D". "Q160" was evaluated with the sample by a molten fluid volume per unit time measured under the conditions of 280°C and 160kg, and "Q10" was evaluated in the same manner by a molten fluid volume per unit time measured under the conditions of 280°C and 10kg. N-value was calculated by the following mathematical formula (I) using "Q160" and "Q10":
[Mathematical Formula 9]

$$\text{N-value}=(\log(Q160)-\log(Q10))/(\log 160-\log 10) \quad \cdots (I)$$

<Example 1>

A polycarbonate resin was produced by using a continuously-producing apparatus equipped with one regulating tank for main starting materials, two regulating tanks for a linking agent, four vertical stirred reactors and one horizontal stirred reactor under the conditions shown below. Firstly, inner temperature and pressure of each reactor and preheater were adjusted to predetermined values corresponding to the reaction conditions shown in Table 1.

In the regulating tank for main starting materials 1R in a nitrogen atmosphere, diphenyl carbonate and bisphenol A (BPA) were mixed as needed to prepare a molten mixture with a molar ratio (diphenyl carbonate /BPA) of 1.12.

The molten mixture was fed continuously into the first vertical stirred reactor 3R (reaction conditions: 100 torr (13 kPa), 180°C, rate of stirring of 160 rpm, volume of 130L) at a flow rate of 91 kg/hr. The liquid level was kept constant by controlling the opening of a valve mounted on a polymer discharging line at the bottom of the reactor so that the average retention time of the reaction mixture in the first vertical stirred reactor 3R becomes 60 minutes. At this time, an 0.2 w/v% aqueous solution of cesium carbonate ($Cs_2CO_3$) was added from 1Cat at a rate of 0.5 pmol per mole of BPA (15.8 ml/hr).

The polymerization reaction solution discharged from the bottom of the first vertical stirred reactor 3R was fed continuously to the second vertical stirred reactor 4R, the third vertical stirred reactor 5R, the fourth vertical stirred reactor 6R and the fifth horizontal stirred reactor 7R in order.

In the fifth horizontal stirred reactor 7R, prepolymer (hereinafter, "PP") was fed at a flow rate of 50 kg/hr from the fourth vertical stirred reactor 6R, while the aliphatic diol compound (9,9-bis[4-(2-hydroxyethoxy)phenyl]fluorene; hereinafter, "BPEF") was fed continuously thereto from linking agent regulating tanks 2Ra and 2Rb by a metering pump at a flow rate of 1597 g/hr corresponding to 0.25 mol per mole of the total amount of terminal groups of PP. The inner pressure of the fifth horizontal stirred reactor 7R at this time was 66,7 Pa (0.5 torr) which means that the aliphatic diol compound was fed continuously into the linking and highly-polymerizing reactor under high vacuum of 66.7 Pa (0.5 torr).

The aliphatic diol compound was heated and melted at 190°C, and was subjected to dehydration treatment so as to have the water content of 0.3% by weight in a linking agent regulating tank in advance. The melt viscosity of the aliphatic diol compound at the time of being fed continuously to the fifth horizontal stirred reactor 7R was 40 poise. The method for feeding continuously to the fifth horizontal stirred reactor 7R was a droplet injection.

During polymerization reaction or highly-polymerizing reaction, the liquid level was controlled so that the average retention time in each vertical stirred reactor became 60 minutes and the average retention time in the fifth horizontal stirred reactor 7R became 30 minutes. By-product phenol produced as starting the polymerization reaction was distilled out. The stirring blade 7Y of the fifth horizontal stirred reactor 7R was stirred at 20 rpm.

The weight-average molecular weight (Mw) in terms of polystyrene of the polymer obtained from the fourth vertical stirred reactor 6R before starting the linking and highly-polymerizing reaction in the fifth horizontal stirred reactor 7R was 20,200, the number-average molecular weight (Mn) in terms of polystyrene thereof was 9,800, the distribution degree (Mw/Mn) was 2.06, the concentration of terminal phenyl groups was 7.1 mol%, and the concentration of terminal hydroxy groups was 200 ppm.

The weight-average molecular weight (Mw) in terms of polystyrene of the polycarbonate resin obtained after the linking and highly-polymerizing reaction in the fifth horizontal stirred reactor 7R was 60,000, the number-average molecular weight (Mn) in terms of polystyrene thereof was 27,000, the distribution degree (Mw/Mn) was 2.22 and the rate of increase of Mw per minute of retention time was 1327. The polycarbonate resin thus obtained had N-value of 1.21 and YI-value of 1.0. The surface renewal efficiency in the fifth horizontal stirred reactor 7R at the time of the linking and highly-polymerizing reaction was 0.05-0.8.

Reactors used in Example 1 were as follows:

First to Fourth Vertical Stirred Reactors:

Manufacturer; Sumitomo Heavy Industries, Ltd.
Material; SUS 316L electrolytically polished
Stirring Blade; Maxblend impeller was used for the first to third vertical stirred reactors and a double helical ribbon blade was used for the fourth vertical stirred reactor.

Fifth Horizontal Stirred Reactors:

Manufacturer; Hitachi Plant Technologies, Ltd.
Material; SUS 316L electrolytically polished
Stirring Shaft; L/D=780/236 (L: Tank Length, Horizontal rotary shaft 78.0 cm (liquid contact section), D: Rotation Diameter of rotary shaft 23.6 cm), Tank Width (M)=42.0 cm, Spectacle-shaped blade polymerizer 96L
The number of addition tubes for aliphatic diol compounds : 1
The liquid transfer pump for aliphatic diol compounds: Constant pulse free metering pump manufactured by Fuji Techno Industries Corporation.
Liquid transfer tubes: Heat insulating tube having a double-tube structure with a mechanical seal
Extractor: a screw type extractor
Method of adjusting the oxygen concentration in reactors: nitrogen substitution

The retention time of the reaction mixture means an average retention time of the reaction mixture retaining from the feed inlet of the aromatic polycarbonate prepolymer from the vertical stirred reactors to the extract outlet of the high-molecular-weight polycarbonate resin produced.

According to the process in Example 1, 25kg of prepolymer (PP) was charged into the fifth horizontal stirred reactor 7R in advance before initiating the continuous production. Then, keeping the liquid level constant and adjusting the gear pump 6P and the screw type extractor 7P to the flow rate of 50 kg/hr which were the conditions to keep the retention time of PP in the reactor 30 minutes, the continuous production was carried out while the retention time was actually measured by a tracer and was checked.

<Example 2>

The experiment was carried out in the same manner as in Example 1 except for changing the stirring frequency of the stirring blade 7Y in the fifth horizontal stirred reactor 7R to 10 rpm.

The weight-average molecular weight (Mw) in terms of polystyrene of the polymer obtained from the fourth vertical stirred reactor 6R before initiating the linking and highly-polymerizing reaction in the fifth horizontal stirred reactor 7R was 20,200, the number-average molecular weight (Mn) in terms of polystyrene thereof was 9,800, the distribution degree (Mw/Mn) was 2.06, the concentration of terminal phenyl groups was 7.1 mol%, and the concentration of terminal hydroxy groups was 200 ppm.

The weight-average molecular weight (Mw) in terms of polystyrene of the polycarbonate resin obtained after the linking and highly-polymerizing reaction in the fifth horizontal stirred reactor 7R was 57,000, the number-average molecular weight (Mn) in terms of polystyrene thereof was 25,000, the distribution degree (Mw/Mn) was 2.28 and the

rate of increase of Mw per minute of retention time was 1227. The polycarbonate resin thus obtained had N-value of 1.21 and YI-value of 1.1. The surface renewal efficiency in the fifth horizontal stirred reactor 7R at the time of the linking and highly-polymerizing reaction was 0.01-0.3.

<Example 3>

The experiment was carried out in the same manner as in Example 1 except for changing the rate of adding the linking agent to the fifth horizontal stirred reactor 7R so that the average retention time in said reactor becomes 15 minutes. That is, 25kg of prepolymer (PP) was charged into the fifth horizontal stirred reactor 7R in advance before initiating the continuous production. Then, keeping the liquid level constant and adjusting the gear pump 6P and the screw type extractor 7P to the flow rate of 100 kg/hr which were the conditions to keep the retention time of PP in the reactor 15 minutes, the continuous production was carried out while the retention time was actually measured by a tracer and was checked.

While feeding PP from the fourth vertical stirred reactor 6R at a flow rate of 100 kg/hr, an aliphatic diol compound (9,9-bis[4-(2-hydroxyethoxy)phenyl]fluorene; BPEF) was fed continuously thereto from the linking agent regulating tanks 2Ra and 2Rb by a metering pump at a flow rate of 3194 g/hr corresponding to 0.25 mol per mole of the total amount of terminal groups of PP.

The weight-average molecular weight (Mw) in terms of polystyrene of the polymer obtained from the fourth vertical stirred reactor 6R before initiating the linking and highly-polymerizing reaction in the fifth horizontal stirred reactor 7R was 20,200, the number-average molecular weight (Mn) in terms of polystyrene thereof was 9,800, the distribution degree (Mw/Mn) was 2.06, the concentration of terminal phenyl groups was 7.1 mol%, and the concentration of terminal hydroxy groups was 200 ppm.

The weight-average molecular weight (Mw) in terms of polystyrene of the polycarbonate resin obtained after the linking and highly-polymerizing reaction in the fifth horizontal stirred reactor 7R was 45,000, the number-average molecular weight (Mn) in terms of polystyrene thereof was 20,000, the distribution degree (Mw/Mn) was 2.29 and the rate of increase of Mw per minute of retention time was 1653. The polycarbonate resin thus obtained had N-value of 1.15 and YI-value of 1.0. The surface renewal efficiency in the fifth horizontal stirred reactor 7R at the time of the linking and highly-polymerizing reaction was 0.05-0.8.

<Example 4>

The experiment was carried out in the same manner as in Example 1 except for changing the linking agent to 2,2'-bis[(2-hydroxyethoxy)phenyl]propane (BPS-2EO).

The feeding rate of BPA-2EO was 1152 g/hr corresponding to 0.25 mol per mole of the total amount of terminal groups of PP. The flow rate of prepolymer was 50 kg/hr and the amount of prepolymer charged to the fifth horizontal stirred reactor 7R was 25kg.

The weight-average molecular weight (Mw) in terms of polystyrene of the polymer obtained from the fourth vertical stirred reactor 6R before initiating the linking and highly-polymerizing reaction in the fifth horizontal stirred reactor 7R was 20,200, the number-average molecular weight (Mn) in terms of polystyrene thereof was 9,800, the distribution degree (Mw/Mn) was 2.06, the concentration of terminal phenyl groups was 7.1 mol%, and the concentration of terminal hydroxy groups was 200 ppm.

The weight-average molecular weight (Mw) in terms of polystyrene of the polycarbonate resin obtained after the linking and highly-polymerizing reaction in the fifth horizontal stirred reactor 7R was 61,000, the number-average molecular weight (Mn) in terms of polystyrene thereof was 27,500, the distribution degree (Mw/Mn) was 2.22 and the rate of increase of Mw per minute of retention time was 1360. The polycarbonate resin thus obtained had N-value of 1.22 and YI-value of 1.1. The surface renewal efficiency in the fifth horizontal stirred reactor 7R at the time of the linking and highly-polymerizing reaction was 0.05-0.8.

<Example 5>

The experiment was carried out in the same manner as in Example 1 except for changing the linking agent to pentacyclopentadecanedimethanol (PCPDM) and changing the amount of the linking agent to 0.325 mol per mole of the total amount of terminal groups of PP.

The feeding rate of PCPDM was 1243 g/hr corresponding to 0.325 mol per mole of the total amount of terminal groups of PP.

The weight-average molecular weight (Mw) in terms of polystyrene of the polymer obtained from the fourth vertical stirred reactor 6R before initiating the linking and highly-polymerizing reaction in the fifth horizontal stirred reactor 7R was 20,200, the number-average molecular weight (Mn) in terms of polystyrene thereof was 9,800, the distribution

degree (Mw/Mn) was 2.06, the concentration of terminal phenyl groups was 7.1 mol%, and the concentration of terminal hydroxy groups was 200 ppm.

The weight-average molecular weight (Mw) in terms of polystyrene of the polycarbonate resin obtained after the linking and highly-polymerizing reaction in the fifth horizontal stirred reactor 7R was 56,000, the number-average molecular weight (Mn) in terms of polystyrene thereof was 25,000, the distribution degree (Mw/Mn) was 2.24 and the rate of increase of Mw per minute of retention time was 1193. The polycarbonate resin thus obtained had N-value of 1.21 and YI-value of 1.2. The surface renewal efficiency in the fifth horizontal stirred reactor 7R at the time of the linking and highly-polymerizing reaction was 0.05-0.8.

<Comparative Example 1>

The experiment was carried out in the same manner as in Example 1 except for mixing the aromatic polycarbonate prepolymer and the aliphatic diol compound in advance at normal pressure for 10 minutes using a biaxial screw-type extruder, trade name "TEX54" manufactured by The Japan Steel Works, Ltd., to form a mixture, and then feeding the mixture to the fifth horizontal stirred reactor 7R. That is, the production apparatus shown in Fig.2 was used for producing the polycarbonate resin in place of the production apparatus shown in Fig.1.

The weight-average molecular weight (Mw) in terms of polystyrene of the polycarbonate resin thus produced was 23,500, the number-average molecular weight (Mn) in terms of polystyrene thereof was 9,800, the distribution degree (Mw/Mn) was 2.40, and the rate of increase of Mw per minute of retention time was 110. The polycarbonate resin thus obtained had N-value of 1.33 and YI-value of 2.5.

<Comparative Example 2>

The experiment was carried out in the same manner as in Example 4 except for mixing the aromatic polycarbonate prepolymer and the aliphatic diol compound in advance at normal pressure for 10 minutes using a biaxial screw-type extruder, trade name "TEX54" manufactured by The Japan Steel Works, Ltd., to form a mixture, and then feeding the mixture to the fifth horizontal stirred reactor 7R. That is, the production apparatus shown in Fig.2 was used for producing the polycarbonate resin in place of the production apparatus shown in Fig.1.

The weight-average molecular weight (Mw) in terms of polystyrene of the polycarbonate resin thus produced was 29,000, the number-average molecular weight (Mn) in terms of polystyrene thereof was 12,000, the distribution degree (Mw/Mn) was 2.42, and the rate of increase of Mw per minute of retention time was 293. The polycarbonate resin thus obtained had N-value of 1.32 and YI-value of 2.6.

<Comparative Example 3>

The experiment was carried out in the same manner as in Example 5 except for mixing the aromatic polycarbonate prepolymer and the aliphatic diol compound in advance at normal pressure for 10 minutes using a biaxial screw-type extruder, trade name "TEX54" manufactured by The Japan Steel Works, Ltd., to form a mixture, and then feeding the mixture to the fifth horizontal stirred reactor 7R. That is, the production apparatus shown in Fig.2 was used for producing the polycarbonate resin in place of the production apparatus shown in Fig.1.

The weight-average molecular weight (Mw) in terms of polystyrene of the polycarbonate resin thus produced was 22,500, the number-average molecular weight (Mn) in terms of polystyrene thereof was 9,200, the distribution degree (Mw/Mn) was 2.45, and the rate of increase of Mw per minute of retention time was 77. The polycarbonate resin thus obtained had N-value of 1.31 and YI-value of 3.6.

<Comparative Example 4>

The experiment was carried out in the same manner as in Example 1 except for changing the inner pressure in the fifth horizontal stirred reactor 7R to 20 torr (2666 Pa). That is, the aliphatic diol compound was fed continuously to the linking and highly-polymerizing reactor under reduced pressure of 2666 Pa (20 torr).

The weight-average molecular weight (Mw) in terms of polystyrene of the polymer obtained from the fourth vertical stirred reactor 6R before initiating the linking and highly-polymerizing reaction in the fifth horizontal stirred reactor 7R was 20,200, the number-average molecular weight (Mn) in terms of polystyrene thereof was 9,800, the distribution degree (Mw/Mn) was 2.06, the concentration of terminal phenyl groups was 7.1 mol%, and the concentration of terminal hydroxy groups was 200 ppm.

The weight-average molecular weight (Mw) in terms of polystyrene of the polycarbonate resin obtained after the linking and highly-polymerizing reaction in the fifth horizontal stirred reactor 7R was 20,300, the number-average molecular weight (Mn) in terms of polystyrene thereof was 9,000, the distribution degree (Mw/Mn) was 2.26 and the rate

of increase of Mw per minute of retention time was 3. The polycarbonate resin thus obtained had N-value of 1.21 and YI-value of 1.0. The surface renewal efficiency in the fifth horizontal stirred reactor 7R at the time of the linking and highly-polymerizing reaction was 0.05-0.8.

The results of the above-mentioned Examples 1-5 and Comparative Examples 1-4 are shown in Table 1. In Table 1, the term "Amount of Linking Agent" is a mole number per mole of the total amount of terminal groups of the aromatic polycarbonate prepolymer (PP).

[Table 1]

| | | Unit | Example 1 | Example 2 | Example 3 | Example 4 | Example 5 | Comp. Ex.1 | Comp. Ex.2 | Comp. Ex.3 | Comp. Ex.4 |
|---|---|---|---|---|---|---|---|---|---|---|---|
| Kneader 6Mix | Linking Agent | - | Not Used | Not Used | Not Used | Not Used | Not Used | BPEF | BPA-2EO | PCPDM | Not Used |
| | Feed Amount of Linking Agent | mol (*1) | | | | | | 0.25 | 0.25 | 0.325 | |
| | Feeding Rate of Linking Agent | g/hr | | | | | | 1597 | 1152 | 1243 | |
| | Temperature of Linking Agent | °C | | | | | | 190 | 120 | 120 | |
| | Feeding and Extracting Rate of PP | kg/hr | | | | | | 50 | 50 | 50 | |
| | Inner Temperature | °C | | | | | | 300 | 300 | 300 | |
| | Temperature of Heating Medium | °C | | | | | | 320 | 320 | 320 | |
| | Pressure | torr (Pa) | | | | | | 760(101) | 760(101) | 760(101) | |

(continued)

| | | Unit | Example 1 | Example 2 | Example 3 | Example 4 | Example 5 | Comp. Ex.1 | Comp. Ex.2 | Comp. Ex.3 | Comp. Ex.4 |
|---|---|---|---|---|---|---|---|---|---|---|---|
| Fifth horizontal stirred reactor | Linking Agent | - | BPEF | BPEF | BPEF | BPA-2EO | PCPDM | Not added under vacuum | Not added under vacuum | Not added under vacuum | BPEF |
| | Feed Amount of Linking Agent | mol (*1) | 0.25 | 0.25 | 0.25 | 0.25 | 0.325 | | | | 0.25 |
| | Feeding Rate of Linking Agent | g/hr | 1597 | 1597 | 3194 | 1152 | 1243 | | | | 1597 |
| | Temperature of Linking Agent | °C | 190 | 190 | 190 | 120 | 120 | | | | 190 |
| | Feeding and Extracting Rate of PP | kg/hr | 50 | 50 | 100 | 50 | 50 | | | | 50 |
| | Amount of Resin in Reactor | kg | 25 | 25 | 25 | 25 | 25 | 25 | 25 | 25 | 25 |
| | Inner Temperature | °C | 300 | 300 | 300 | 300 | 300 | 300 | 300 | 300 | 300 |
| | Temperature of Heating Medium | °C | 320 | 320 | 320 | 320 | 320 | 320 | 320 | 320 | 320 |
| | Pressure | torr (Pa) | 0.5(67) | 0.5(67) | 0.5(67) | 0.5(67) | 0.5(67) | 0.5(67) | 0.5(67) | 0.5(67) | 20 (2666) |
| | Average Retention Time | min | 30 | 30 | 15 | 30 | 30 | 30 | 30 | 30 | 30 |
| | Rate of Stirring | rpm | 20 | 10 | 20 | 20 | 20 | 20 | 20 | 20 | 20 |

(continued)

| | | Unit | Example 1 | Example 2 | Example 3 | Example 4 | Example 5 | Comp. Ex.1 | Comp. Ex.2 | Comp. Ex.3 | Comp. Ex.4 |
|---|---|---|---|---|---|---|---|---|---|---|---|
| Resin | Mw | - | 60000 | 57000 | 45000 | 61000 | 56000 | 23500 | 29000 | 22500 | 20300 |
| | Mn | - | 27000 | 25000 | 20000 | 27500 | 25000 | 9800 | 12000 | 9200 | 9000 |
| | Mw Amount of lincrease | Mw/min | 1327 | 1227 | 1653 | 1360 | 1193 | 110 | 293 | 77 | 3 |
| | Concentration of OH | ppm | 260 | 250 | 280 | 250 | 270 | 300 | 290 | 300 | 2000 |
| | N-value | - | 1.21 | 1.21 | 1.15 | 1.22 | 1.21 | 1.33 | 1.32 | 1.31 | 1.21 |
| | YI-value | - | 1.0 | 1.1 | 1.0 | 1.1 | 1.2 | 2.5 | 2.6 | 3.0 | 1.0 |

(*1) Mole number per mole of the total amount of terminal groups of PP

<Example 6>

The experiment was carried out in the same manner as in Example 1 except for changing the rate of adding the linking agent to the fifth horizontal stirred reactor 7R so that the average retention time in said reactor becomes 20 minutes. That is, 25kg of prepolymer (PP) was charged into the fifth horizontal stirred reactor 7R in advance before initiating the continuous production. Then, keeping the liquid level constant and adjusting the gear pump 6P and the screw type extractor 7P to the flow rate of 75 kg/hr which were the conditions to keep the retention time of PP in the reactor 20 minutes, the continuous production was carried out while the retention time was actually measured by a tracer and was checked.

While feeding PP from the fourth vertical stirred reactor 6R at a flow rate of 75 kg/hr, an aliphatic diol compound (9,9-bis[4-(2-hydroxyethoxy)phenyl]fluorene; BPEF) was fed continuously thereto from the linking agent regulating tanks 2Ra and 2Rb by a metering pump at a flow rate of 2396 g/hr corresponding to 0.25 mol per mole of the total amount of terminal groups of PP.

The weight-average molecular weight (Mw) in terms of polystyrene of the polymer obtained from the fourth vertical stirred reactor 6R before initiating the linking and highly-polymerizing reaction in the fifth horizontal stirred reactor 7R was 20,200, the number-average molecular weight (Mn) in terms of polystyrene thereof was 9,800, the distribution degree (Mw/Mn) was 2.06, the concentration of terminal phenyl groups was 7.1 mol%, and the concentration of terminal hydroxy groups was 200 ppm.

The weight-average molecular weight (Mw) in terms of polystyrene of the polycarbonate resin obtained after the linking and highly-polymerizing reaction in the fifth horizontal stirred reactor 7R was 55,000, the number-average molecular weight (Mn) in terms of polystyrene thereof was 24,000, the distribution degree (Mw/Mn) was 2.29 and the rate of increase of Mw per minute of retention time was 1740. The polycarbonate resin thus obtained had N-value of 1.20 and YI-value of 1.1. The surface renewal efficiency in the fifth horizontal stirred reactor 7R at the time of the linking and highly-polymerizing reaction was 0.05-0.8.

<Comparative Example 5>

The experiment was carried out in the same manner as in Example 1 except for mixing the aromatic polycarbonate prepolymer and the aliphatic diol compound in advance at normal pressure for 10 minutes using a biaxial screw-type extruder to form a mixture, and then feeding the mixture to the fifth horizontal stirred reactor 7R to carry out reaction by adjusting the retention time to 60 minutes. That is, the production apparatus shown in Fig. 2 was used for producing the polycarbonate resin in place of the production apparatus shown in Fig.1.

The weight-average molecular weight (Mw) in terms of polystyrene of the polycarbonate resin thus produced was 44,000, the number-average molecular weight (Mn) in terms of polystyrene thereof was 18,000, the distribution degree (Mw/Mn) was 2.44, and the rate of increase of Mw per minute of retention time was 397. The polycarbonate resin thus obtained had N-value of 1.40 and YI-value of 4.0.

<Comparative Example 6>

The experiment was carried out in the same manner as in Example 1 except for mixing the aromatic polycarbonate prepolymer and the aliphatic diol compound in advance at normal pressure for 10 minutes using a biaxial screw-type extruder to form a mixture, and then feeding the mixture to the fifth horizontal stirred reactor 7R to carry out reaction by adjusting the retention time to 90 minutes. That is, the production apparatus shown in Fig. 2 was used for producing the polycarbonate resin in place of the production apparatus shown in Fig.1.

The weight-average molecular weight (Mw) in terms of polystyrene of the polycarbonate resin thus produced was 57,000, the number-average molecular weight (Mn) in terms of polystyrene thereof was 22,000, the distribution degree (Mw/Mn) was 2.59, and the rate of increase of Mw per minute of retention time was 409. The polycarbonate resin thus obtained had N-value of 1.45 and YI-value of 6.0.

The results of the above-mentioned Examples 1, 3, 6 and Comparative Examples 1, 5, 6 are shown in Table 2 and Figs 3 to 5. Fig.3 shows a chart showing the relationship between the retention time and Mw. Fig.4 shows a chart showing the relationship between the retention time and N-value. Fig. 5 shows a chart showing the relationship between the retention time and YI-value. In the Figs 3 to 5, the results of Examples 1, 3, 6 are shown as ■, black square, and the results of Comparative Examples 1, 5, 6 are shown as □, white square.

[Table 2]

| | | Unit | Example 1 | Example 6 | Example 3 | Comp. Ex.1 | Comp. Ex.5 | Comp. Ex.6 |
|---|---|---|---|---|---|---|---|---|
| Kneader 6Mix | Linking Agent | - | Not Used | Not Used | Not Used | BPEF | BPEF | BPEF |
| | Feed Amount of Linking Agent | mol (*1) | | | | 0.25 | 0.25 | 0.25 |
| | Feeding Rate of Linking Agent | g/hr | | | | 1597 | 799 | 532 |
| | Temperature of Linking Agent | °C | | | | 190 | 190 | 190 |
| | Feeding and Extracting Rate of PP | kg/hr | | | | 50 | 25 | 16.7 |
| | Inner Temperature | °C | | | | 300 | 300 | 300 |
| | Temperature of Heating Medium | °C | | | | 320 | 320 | 320 |
| | Pressure | torr (Pa) | | | | 760 (101) | 760 (101) | 760 (101) |

(continued)

| | | Unit | Example 1 | Example 6 | Example 3 | Comp. Ex.1 | Comp. Ex.5 | Comp. Ex.6 |
|---|---|---|---|---|---|---|---|---|
| Fifth horizontal stirred reactor 7R | Linking Agent | - | BPEF | BPEF | BPEF | Not added under vacuum | Not added under vacuum | Not added under vacuum |
| | Feed Amount of Linking Agent | mol (*1) | 0.25 | 0.25 | 0.25 | | | |
| | Feeding Rate of Linking Agent | g/hr | 1597 | 2396 | 3194 | | | |
| | Temperature of Linking Agent | °C | 190 | 190 | 190 | | | |
| | Feeding and Extracting Rate of PP | kg/hr | 50 | 75 | 100 | | | |
| | Amount of Resin in Reactor | kg | 25 | 25 | 25 | 25 | 25 | 25 |
| | Inner Temperature | °C | 300 | 300 | 300 | 300 | 300 | 300 |
| | Temperature of Heating Medium | °C | 320 | 320 | 320 | 320 | 320 | 320 |
| | Pressure | torr (Pa) | 0.5(67) | 0.5(67) | 0.5(67) | 0.5(67) | 0.5(67) | 0.5(67) |
| | Average Retention Time | min | 30 | 20 | 15 | 30 | 60 | 90 |
| | Rate of Stirring | rpm | 20 | 20 | 20 | 20 | 20 | 20 |
| Resin | Mw | - | 60000 | 55000 | 45000 | 23500 | 44000 | 57000 |
| | Mn | - | 27000 | 24000 | 20000 | 9800 | 18000 | 22000 |
| | Mw Amount of Iincrease | Mw/min | 1327 | 1740 | 1653 | 110 | 397 | 409 |
| | Concentration of OH | ppm | 260 | 270 | 280 | 300 | 280 | 270 |
| | N-value | - | 1.21 | 1.20 | 1.15 | 1.33 | 1.40 | 1.45 |
| | YI-value | - | 1.0 | 1.1 | 1.0 | 2.5 | 4.0 | 6.0 |
| (* 1) Mole number per mole of the total amount of terminal groups of PP | | | | | | | | |

As shown in Table 2 and Figs 3-5, an intended high molecular weight was achieved in short retention time when the method of the present invention is employed. As a result, the high-molecular-weight polycarbonate resin thus obtained had low N-value and low YI-value and was excellent in hue.

The results of Comparative Examples 1, 5 and 6 wherein the linking and highly-polymerizing reaction was carried out by mixing the aromatic polycarbonate prepolymer and the aliphatic diol compound in advance at normal pressure for long time and then feeding the mixture to the linking and highly-polymerizing reactor show that intended high molecular weight was not obtained by employing the same retention time as in Examples 1, 3 and 6.

As a result of taking a long time to reach to the intended high molecular weight, the high-molecular-weight polycarbonate resin thus obtained had high N-value and high YI-value and was poor in hue.

## Industrial Applicability

According to the production method of the present invention, the linking and highly-polymerizing reaction of the aromatic polycarbonate prepolymer with the aliphatic diol compound can progress quickly and homogeneously without decreasing the reaction rate. As a result, a high-molecular-weight polycarbonate resin having low N-value and excellent in hue can be obtained.

## Claims

1. A method for a continuous production of a high-molecular-weight polycarbonate resin which comprises

   a process (A) of producing an aromatic polycarbonate prepolymer by a polycondensation reaction of an aromatic dihydroxy compound with diester carbonate in a polycondensation reactor and
   a process (B) of conducting a linking and highly-polymerizing reaction of said aromatic polycarbonate prepolymer produced by said process (A) with an aliphatic diol compound in a linking and highly-polymerizing reactor, wherein said aromatic polycarbonate prepolymer produced by said process (A) is continuously fed into the linking and highly-polymerizing reactor while said aliphatic diol compound is continuously fed into the linking and highly-polymerizing reactor under reduced pressure of 1333 Pa (10 torr) or less.

2. The method for a continuous production of a high-molecular-weight polycarbonate resin according to claim 1, wherein the retention time of the reaction mixture in said linking and highly-polymerizing reactor is 60 minutes or less.

3. The method for a continuous production of a high-molecular-weight polycarbonate resin according to claim 1, wherein said aliphatic diol compound is a compound represented by the following general formula (A):
   [Chemical Formula A]

$$HO\text{-}(CR_1R_2)_n\text{-}Q\text{-}(CR_3R_4)_m\text{-}OH \cdots \qquad (A)$$

   wherein "Q" represents a hydrocarbon group having at least 3 carbon atoms which may contain an atom of a different kind; $R_1$, $R_2$, $R_3$ and $R_4$ each independently represent a group selected from the group consisting of a hydrogen atom, an aliphatic hydrocarbon group having 1-30 carbon atoms and an aromatic hydrocarbon group having 6-20 carbon atoms, with the proviso that at least one of $R_1$ and $R_2$ and at least one of $R_3$ and $R_4$ are each independently selected from the group consisting of a hydrogen atom and said aliphatic hydrocarbon group; "n" and "m" each independently represent an integer of 0-10 or "n" and "m" each independently represent an integer of 1-10 in the case that Q contains no aliphatic hydrocarbon groups binding to the terminal hydroxy groups.

4. The method for a continuous production of a high-molecular-weight polycarbonate resin according to claim 3, wherein said aliphatic diol compound is a primary diol compound.

5. The method for a continuous production of a high-molecular-weight polycarbonate resin according to claim 1, wherein said aliphatic diol compound has a boiling point at normal pressure of 240°C or higher.

6. The method for a continuous production of a high-molecular-weight polycarbonate resin according to claim 1, wherein said aromatic polycarbonate prepolymer obtained by said process (A) has the concentration of terminal hydroxy groups of 1,500 ppm or less.

7. The method for a continuous production of a high-molecular-weight polycarbonate resin according to claim 1, wherein said high-molecular-weight polycarbonate resin has a structural viscosity index (N-value) represented by the following mathematical formula (I) of 1.30 or less:
   [Mathematical Formula 1]

$$N\text{-value}=(\log(Q160)-\log(Q10))/(\log160-\log10) \quad \cdots (I)$$

   wherein Q160 represents a melting fluid volume per unit time (ml/sec) measured under the conditions of 280°C and 160kg load and Q10 represents a melting fluid volume per unit time (ml/sec) measured under the conditions of 280°C and 10kg load.

8. The method for a continuous production of a high-molecular-weight polycarbonate resin according to claim 1, wherein the weight-average molecular weight of said high-molecular-weight polycarbonate resin ("$Mw_{hp}$"), the weight-average molecular weight of said aromatic polycarbonate prepolymer obtained by said process (A) ("$Mw_{pp}$") and the retention time ("RT"; min) of the reaction mixture in said linking and highly-polymerizing reactor in said process (B) are represented by the following mathematical formula (IV) wherein k' which represents the increased amount of the weight-average molecular weight per minute is 500 or more.
[Mathematical Formula 2]

$$k' = (Mw_{hp} - Mw_{pp})/RT \quad \cdots (IV)$$

9. The method for a continuous production of a high-molecular-weight polycarbonate resin according to claim 1, wherein said linking and highly-polymerizing reactor is a multiaxial horizontal stirred reactor having a number of stirring axes wherein
at least one of said stirring axes having a horizontal rotary shaft and stirring blades mounted approximately orthogonally on said horizontal rotary shaft which are discrete from each other, with L/D in the range from 1 to 15 wherein L is the length of said horizontal rotary shaft and D is the rotation diameter of said stirring blades, and
having a feed inlet of said aromatic polycarbonate prepolymer and, on the opposite side thereof, an extract outlet of said high-molecular-weight polycarbonate resin thus obtained.

10. The method for a continuous production of a high-molecular-weight polycarbonate resin according to claim 1, wherein said linking and highly-polymerizing reactor is a multiaxial horizontal kneaded reactor which has a number of continuous screw type stirring shafts with L/D in the range from 20 to 100 wherein L is the length of said stirring shafts and D is the rotation diameter, and has a feed inlet of said aromatic polycarbonate prepolymer and, on the opposite side thereof, an extract outlet of said high-molecular-weight polycarbonate resin thus obtained.

11. The method for a continuous production of a high-molecular-weight polycarbonate resin according to claim 1, said aliphatic diol compound is subjected to a dehydration treatment so as to have the water content of 3% by weight or less before being fed continuously to said linking and highly-polymerizing reactor.

12. The method for a continuous production of a high-molecular-weight polycarbonate resin according to claim 1, the feed amount per unit time of the aliphatic diol compound to be fed continuously to said linking and highly-polymerizing reactor is 0.01-1.0 times (molar ratio) based upon the total amount of terminal groups of the feed amount per unit time of the aromatic polycarbonate prepolymer to be fed continuously to said linking and highly-polymerizing reactor.

**Patentansprüche**

1. Verfahren zur kontinuierlichen Herstellung eines hochmolekularen Polycarbonatharzes, umfassend

   ein Verfahren (A) des Herstellens eines aromatischen Polycarbonat-Präpolymers durch eine Polykondensationsreaktion einer aromatischen Dihydroxyverbindung mit Diestercarbonat in einem Polykondensationsreaktor und
   ein Verfahren (B) des Durchführens einer Vernetzungs- und Hochpolymerisationsreaktion des durch das Verfahren (A) hergestellten aromatischen Polycarbonat-Präpolymers mit einer aliphatischen Diolverbindung in einem Vernetzungs- und Hochpolymerisationsreaktor, worin das durch das Verfahren (A) hergestellte aromatische Polycarbonat-Präpolymer kontinuierlich dem Vernetzungs- und Hochpolymerisationsreaktor zugeführt wird, während die aliphatische Diolverbindung kontinuierlich dem Vernetzungs- und Hochpolymerisationsreaktor unter einem reduzierten Druck von 1333 Pa (10 Torr) oder weniger zugeführt wird.

2. Verfahren zur kontinuierlichen Herstellung eines hochmolekularen Polycarbonatharzes gemäß Anspruch 1, worin die Retentionszeit des Reaktionsgemischs in dem Vernetzungs- und Hochpolymerisationsreaktor 60 Minuten oder weniger beträgt.

3. Verfahren zur kontinuierlichen Herstellung eines hochmolekularen Polycarbonatharzes gemäß Anspruch 1, worin die aliphatische Diolverbindung eine Verbindung ist, die durch die nachstehende allgemeine Formel (A) dargestellt ist:
[chemische Formel A]

$$HO\text{-}(CR_1R_2)_n\text{-}Q\text{-}(CR_3R_4)_m\text{-}OH \cdots \quad (A)$$

worin "Q" eine Kohlenwasserstoffgruppe mit mindestens 3 Kohlenstoffatomen darstellt, die ein anderes Atom enthalten kann; $R_1$, $R_2$, $R_3$ und $R_4$ jeweils unabhängig voneinander eine Gruppe darstellen, ausgewählt aus der Gruppe, bestehend aus einem Wasserstoffatom, einer aliphatischen Kohlenwasserstoffgruppe mit 1-30 Kohlenstoffatomen und einer aromatischen Kohlenwasserstoffgruppe mit 6-20 Kohlenstoffatomen, mit der Maßgabe, dass mindestens eines aus $R_1$ und $R_2$ und mindestens eines aus $R_3$ und $R_4$ jeweils unabhängig voneinander aus der Gruppe ausgewählt sind, bestehend aus einem Wasserstoffatom und der aliphatischen Kohlenwasserstoffgruppe; "n" und "m" jeweils unabhängig voneinander eine ganze Zahl von 0-10 darstellen oder "n" und "m" jeweils unabhängig voneinander eine ganz Zahl von 1-10 darstellen, falls Q keine aliphatischen Kohlenwasserstoffgruppen, die an die terminalen Hydroxygruppen binden, enthält.

**4.** Verfahren zur kontinuierlichen Herstellung eines hochmolekularen Polycarbonatharzes gemäß Anspruch 3, worin die aliphatische Diolverbindung eine primäre Diolverbindung ist.

**5.** Verfahren zur kontinuierlichen Herstellung eines hochmolekularen Polycarbonatharzes gemäß Anspruch 1, worin die aliphatische Diolverbindung bei Normaldruck einen Siedepunkt von 240°C oder höher aufweist.

**6.** Verfahren zur kontinuierlichen Herstellung eines hochmolekularen Polycarbonatharzes gemäß Anspruch 1, worin das durch das Verfahren (A) erhaltene aromatische Polycarbonat-Präpolymer eine Konzentration an terminalen Hydroxygruppen von 1.500 ppm oder weniger aufweist.

**7.** Verfahren zur kontinuierlichen Herstellung eines hochmolekularen Polycarbonatharzes gemäß Anspruch 1, worin das hochmolekulare Polycarbonatharz einen Strukturviskositätsindex (N-Wert), der durch die nachstehende mathematische Formel (I) dargestellt ist, von 1,30 oder weniger aufweist:
[mathematische Formel 1]

$$\text{N-Wert} = (\log(Q160) - \log(Q10)) / (\log 160 - \log 10) \quad \cdots (I)$$

worin Q160 ein Schmelzflüssigkeitsvolumen pro Zeiteinheit (ml/Sek) darstellt, gemessen unter den Bedingungen von 280°C und einer Last von 160 kg, und Q10 ein Schmelzflüssigkeitsvolumen pro Zeiteinheit (ml/Sek) darstellt, gemessen unter den Bedingungen von 280°C und einer Last von 10 kg.

**8.** Verfahren zur kontinuierlichen Herstellung eines hochmolekularen Polycarbonatharzes gemäß Anspruch 1, worin das gewichtsmittlere Molekulargewicht des hochmolekularen Polycarbonatharzes ("$Mw_{hp}$"), das gewichtsmittlere Molekulargewicht des durch das Verfahren (A) erhaltenen aromatischen Polycarbonat-Präpolymers ("$Mw_{pp}$") und die Retentionszeit ("RT"; min) des Reaktionsgemischs im Vernetzungs- und Hochpolymerisationsreaktor in Verfahren (B) durch die nachstehende mathematische Formel (IV) dargestellt sind, worin k', das die Zunahme des gewichtsmittleren Molekulargewichts pro Minute darstellt, 500 oder mehr beträgt.
[mathematische Formel 2]

$$k' = (Mw_{hp} - Mw_{pp}) / RT \quad \cdots (IV)$$

**9.** Verfahren zur kontinuierlichen Herstellung eines hochmolekularen Polycarbonatharzes gemäß Anspruch 1, worin der Vernetzungs- und Hochpolymerisationsreaktor ein mehrachsiger horizontal gerührter Reaktor ist, der eine Anzahl an Rührachsen aufweist, worin
mindestens eine der Rührachsen eine horizontale Drehwelle und Rührblätter etwa orthogonal auf der horizontalen Drehwelle montiert, die voneinander separiert sind, mit einem L/D in dem Bereich von 1 bis 15 aufweist, worin L die Länge der horizontalen Drehwelle darstellt und D den Rotationsdurchmesser der Rührblätter darstellt, und der einen Zufuhreinlass des aromatischen Polycarbonat-Präpolymers und auf der gegenüberliegenden Seite davon einen Extraktauslass des so erhaltenen hochmolekularen Polycarbonatharzes aufweist.

**10.** Verfahren zur kontinuierlichen Herstellung eines hochmolekularen Polycarbonatharzes gemäß Anspruch 1, worin der Vernetzungs- und Hochpolymerisationsreaktor ein mehrachsiger horizontal gekneteter Reaktor ist, der eine Anzahl von kontinuierlichen Schneckenrührwellen mit einem L/D im Bereich von 20 bis 100 aufweist, worin L die Länge der Rührwellen darstellt und D den Rotationsdurchmesser darstellt, und der einen Zufuhreinlass des aromatischen Polycarbonat-Präpolymers und auf der gegenüberliegenden Seite einen Extraktauslass des so erhaltenen hochmolekularen Polycarbonatharzes aufweist.

**11.** Verfahren zur kontinuierlichen Herstellung eines hochmolekularen Polycarbonatharzes gemäß Anspruch 1, wobei die aliphatische Diolverbindung einer Dehydrierungsbehandlung unterworfen wird, so dass sie vor der Zufuhr zu dem Vernetzungs- und Hochpolymerisationsreaktor einen Wassergehalt von 3 Gew.-% oder weniger aufweist.

**12.** Verfahren zur kontinuierlichen Herstellung eines hochmolekularen Polycarbonatharzes gemäß Anspruch 1, wobei die Zufuhrmenge pro Zeiteinheit der aliphatischen Diolverbindung, die dem Vernetzungs- und Hochpolymerisationsreaktor kontinuierlich zuzuführen ist, das 0,01-1,0-fache (Molverhältnis), bezogen auf die Gesamtmenge an terminalen Gruppen der Zufuhrmenge pro Zeiteinheit des aromatischen Polycarbonat-Präpolymers, das dem Vernetzungs- und Hochpolymerisationsreaktor kontinuierlich zuzuführen ist, beträgt.

## Revendications

**1.** Procédé pour une production continue d'une résine polycarbonate à haut poids moléculaire qui comprend
un procédé (A) de production d'un prépolymère polycarbonate aromatique par une réaction de polycondensation d'un composé di-hydroxyle aromatique avec un carbonate de diester dans un réacteur de polycondensation et
un procédé (B) de réalisation d'une réaction de liaison et de forte polymérisation dudit prépolymère polycarbonate aromatique produit par ledit procédé (A) avec un composé diol aliphatique dans un réacteur de liaison et forte polymérisation, dans lequel ledit prépolymère polycarbonate aromatique produit par ledit procédé (A) est continuellement alimenté dans le réacteur de liaison et de forte polymérisation pendant que ledit composé diol aliphatique est continuellement alimenté dans le réacteur de liaison et de forte polymérisation sous une pression réduite de 1333 Pa (10 torr) ou moins.

**2.** Le procédé pour une production continue d'une résine polycarbonate à haut poids moléculaire selon la revendication 1, dans lequel le temps de rétention du mélange de réaction dans ledit réacteur de liaison et de forte polymérisation est de 60 minutes ou moins.

**3.** Le procédé pour une production continue d'une résine polycarbonate à haut poids moléculaire selon la revendication 1, dans lequel ledit composé diol aliphatique est un composé représenté par la formule générale (A) suivante :
[Formule Chimique A]

$$HO\text{-}(CR_1R_2)_n\text{-}Q\text{-}(CR_3R_4)_m\text{-}OH \cdots \qquad (A)$$

dans laquelle "Q" représente un groupe hydrocarboné ayant au moins 3 atomes de carbone qui peut contenir un atome d'un type différent ; $R_1$, $R_2$, $R_3$ et $R_4$ représentent chacun indépendamment un groupe choisi parmi le groupe constitué d'un atome d'hydrogène, un groupe hydrocarboné aliphatique ayant 1-30 atomes de carbone et un groupe hydrocarboné aromatique ayant 6-20 atomes de carbone, à la condition qu'au moins l'un de $R_1$ et $R_2$ et au moins l'un de $R_3$ et $R_4$ sont chacun indépendamment choisis parmi le groupe constitué d'un atome d'hydrogène et ledit groupe hydrocarboné aliphatique ; "n" et "m" représentent chacun indépendamment un entier de 0-10 ou "n" et "m" représentent chacun indépendamment un entier de 1-10 dans le cas où Q ne contient pas de groupes hydrocarbonés aliphatiques se liant groupes hydroxyles terminaux.

**4.** Le procédé pour une production continue d'une résine polycarbonate à haut poids moléculaire selon la revendication 3, dans lequel ledit composé diol aliphatique est un composé diol primaire.

**5.** Le procédé pour une production continue d'une résine polycarbonate à haut poids moléculaire selon la revendication 1, dans lequel ledit composé diol aliphatique a un point d'ébullition à une pression normale de 240°C ou plus.

**6.** Le procédé pour une production continue d'une résine polycarbonate à haut poids moléculaire selon la revendication 1, dans lequel ledit prépolymère polycarbonate aromatique obtenu par ledit procédé (A) a la concentration de groupes hydroxyles terminaux de 1500 ppm ou moins.

**7.** Le procédé pour une production continue d'une résine polycarbonate à haut poids moléculaire selon la revendication 1, dans lequel ladite résine polycarbonate à haut poids moléculaire a un indice de viscosité structurelle (valeur N) représenté par la formule mathématique (I) suivante de 1,30 ou moins :

[Formule Mathématique 1]

$$\text{Valeur-N}=(\log(Q160)-\log(Q10))/(\log160-\log10) \quad \cdots(I)$$

dans laquelle Q160 représente un volume de fluide fondu par unité de temps (ml/sec) mesuré dans les conditions de 280°C et 160kg e charge et Q10 représente un volume de fluide fondu par unité de temps (ml/sec) mesuré dans les conditions de 280°C et 10kg de charge.

**8.** Le procédé pour une production continue d'une résine polycarbonate à haut poids moléculaire selon la revendication 1, dans lequel le poids moléculaire moyen en poids de ladite résine polycarbonate à haut poids moléculaire ("$Mw_{hp}$"), le poids moléculaire moyen en poids dudit prépolymère polycarbonate aromatique obtenu par ledit procédé (A) ("$Mw_{pp}$") et le temps de rétention ("RT"; min) du mélange réactionnel dans ledit réacteur de liaison et de forte polymérisation dans ledit procédé (B) sont représentés par la formule mathématique (IV) suivante dans laquelle k' qui représente la quantité augmentée du poids moléculaire moyen en poids par minute est 500 ou plus.
[Formule Mathématique 2]

$$k'=(Mw_{hp} - Mw_{pp})/RT \quad \cdots(IV)$$

**9.** Le procédé pour une production continue d'une résine polycarbonate à haut poids moléculaire selon la revendication 1, dans lequel ledit réacteur de liaison et de forte polymérisation est un réacteur mélangé horizontalement multiaxial ayant un nombre d'axes de mélange dans lequel
au moins l'un desdits axes de mélange ayant un arbre rotatif horizontal et des pales de mélange montées approximativement orthogonalement sur ledit arbre rotatif horizontal qui sont séparées les unes des autres, avec L/D dans le domaine de 1 à 15 où L est la longueur dudit arbre rotatif horizontal et D est le diamètre de rotation desdites pales de mélange, et
ayant une entrée d'alimentation dudit prépolymère polycarbonate aromatique et, sur la côté opposé de celui-ci, une sortie d'extraction de ladite résine polycarbonate à haut poids moléculaire ainsi obtenue.

**10.** Le procédé pour une production continue d'une résine polycarbonate à haut poids moléculaire selon la revendication 1, dans lequel ledit réacteur de liaison et de forte polymérisation est un réacteur à pétrissage horizontal multiaxial qui a un nombre d'arbres de mélange de type à vis continue avec L/D dans le domaine de 20 à 100 où L est la longueur desdits arbres de mélange et D est le diamètre de rotation, et aune entrée d'alimentation dudit prépolymère polycarbonate aromatique et, sur le côté opposé de celui-ci, une sortie d'extraction de ladite résine polycarbonate à haut poids moléculaire ainsi obtenue.

**11.** Le procédé pour une production continue d'une résine polycarbonate à haut poids moléculaire selon la revendication 1, ledit composé diol aliphatique est soumis à un traitement de déshydratation de sorte à avoir la teneur d'eau de 3% en poids avant d'être alimenté continuellement audit réacteur de liaison et de forte polymérisation.

**12.** Le procédé pour une production continue d'une résine polycarbonate à haut poids moléculaire selon la revendication 1, la quantité d'alimentation par unité de temps du composé diol aliphatique à être alimentée continuellement audit réacteur de liaison et de forte polymérisation est de 1-1.0 fois (rapport molaire) sur la base de la quantité totale de groupes terminaux de la quantité d'alimentation par unité de temps du prépolymère polycarbonate aromatique à être alimenté continuellement audit réacteur de liaison et de forte polymérisation.

Fig.1

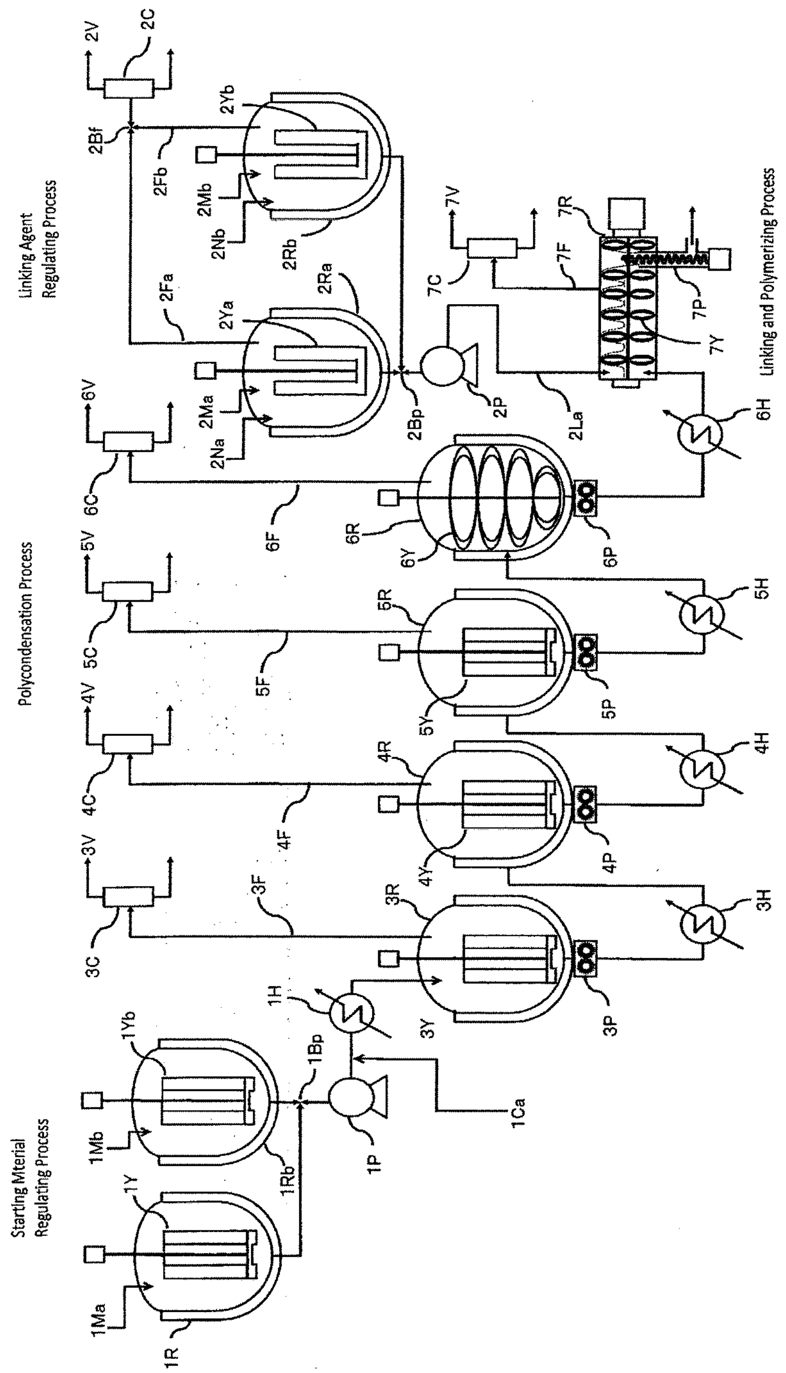
Starting Mterial Regulating Process
Polycondensation Process
Linking Agent Regulating Process
Linking and Polymerizing Process

Fig.2

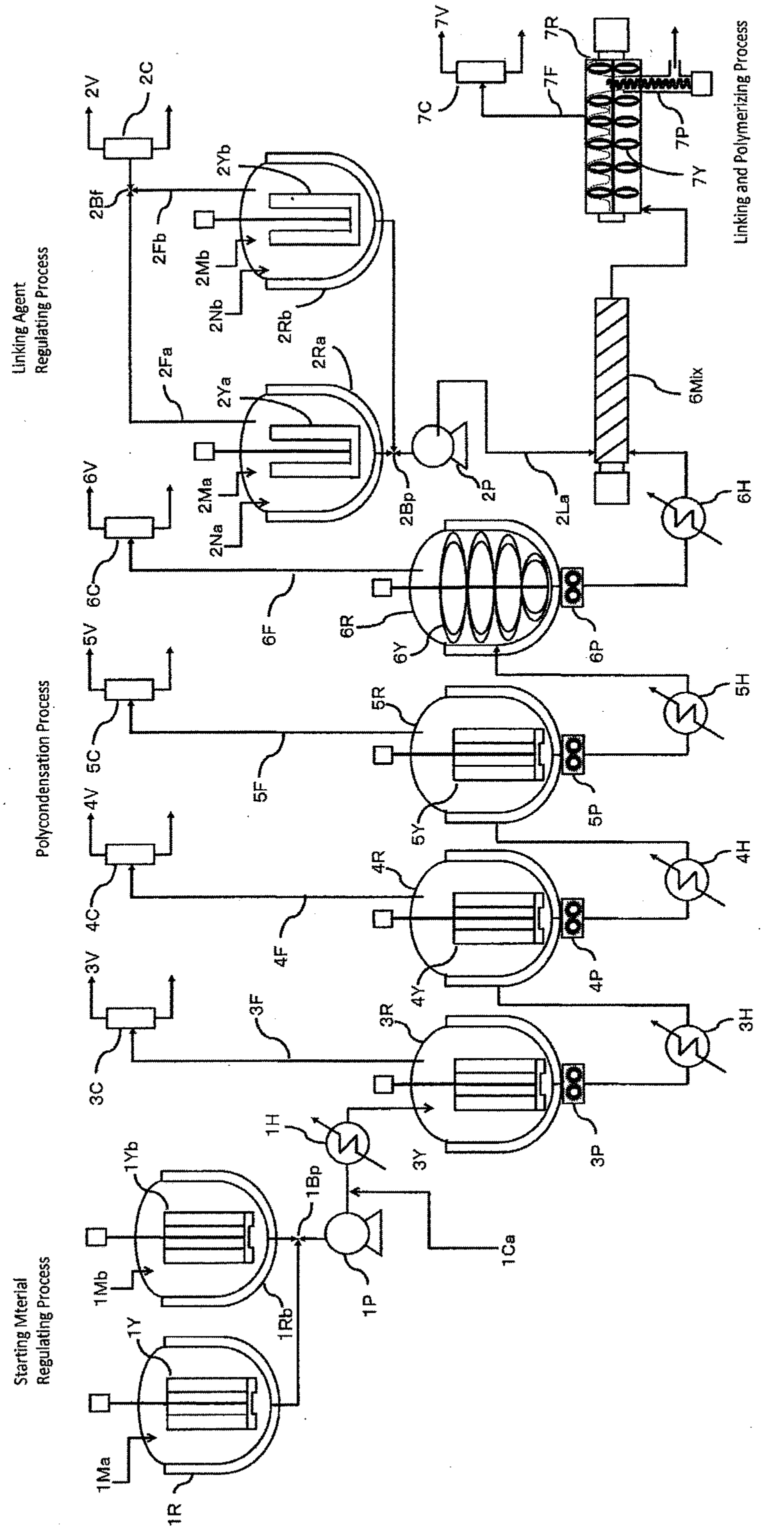
Starting Mterial Regulating Process
Polycondensation Process
Linking Agent Regulating Process
Linking and Polymerizing Process
1R
1Ma
1Y
1Mb
1Rb
1Yb
1Bp
1P
1Ca
1H
3Y
3R
3P
3H
3F
3C
3V
4Y
4R
4P
4H
4F
4C
4V
5Y
5R
5P
5H
5F
5C
5V
6Y
6R
6P
6H
6F
6C
6V
2Na
2Ma
2Ya
2Ra
2Fa
2Bp
2P
2La
2Nb
2Mb
2Rb
2Yb
2Fb
2Bf
2C
2V
6Mix
7C
7V
7F
7R
7P
7Y

Fig.3

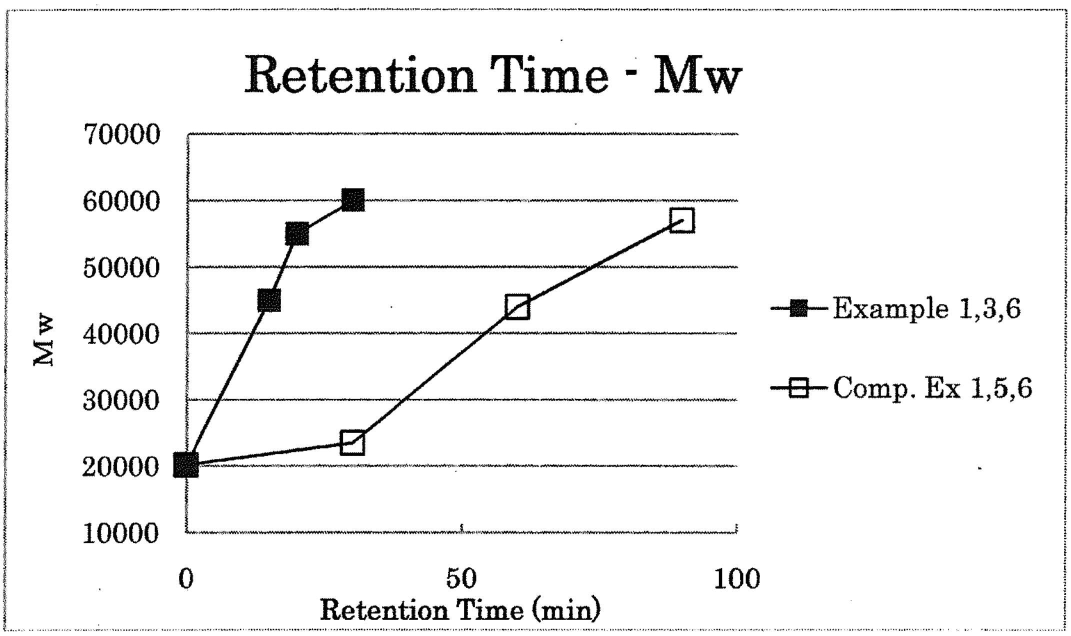
Retention Time - Mw
70000
60000
50000
40000
30000
20000
10000
Mw
0
50
100
Retention Time (min)
Example 1,3,6
Comp. Ex 1,5,6

Fig.4

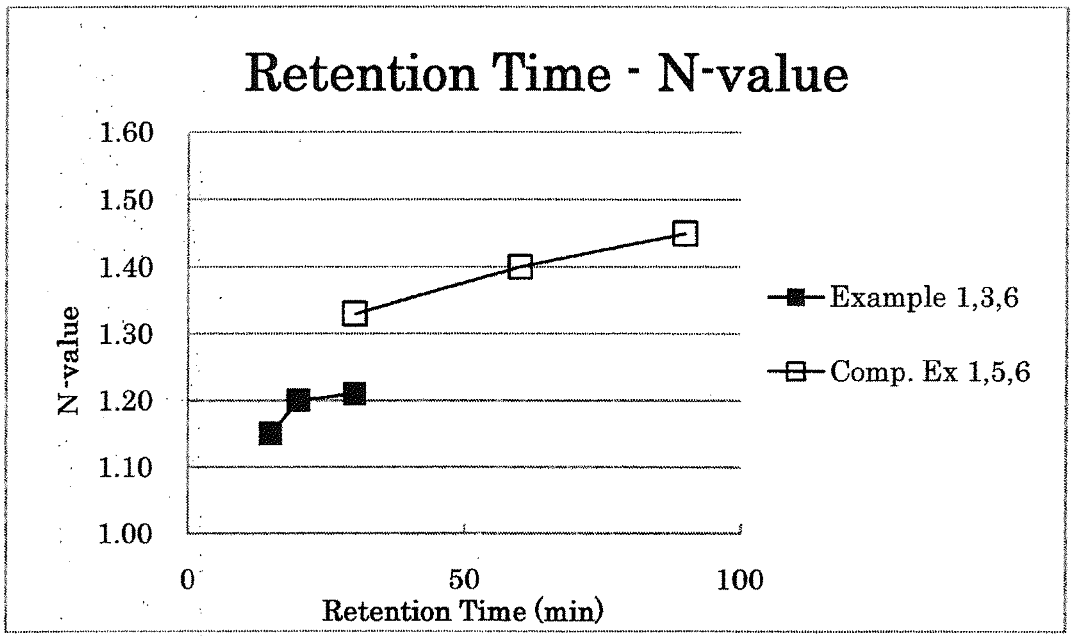
Retention Time - N-value
1.60
1.50
1.40
1.30
1.20
1.10
1.00
N-value
0
50
100
Retention Time (min)
Example 1,3,6
Comp. Ex 1,5,6

Fig.5

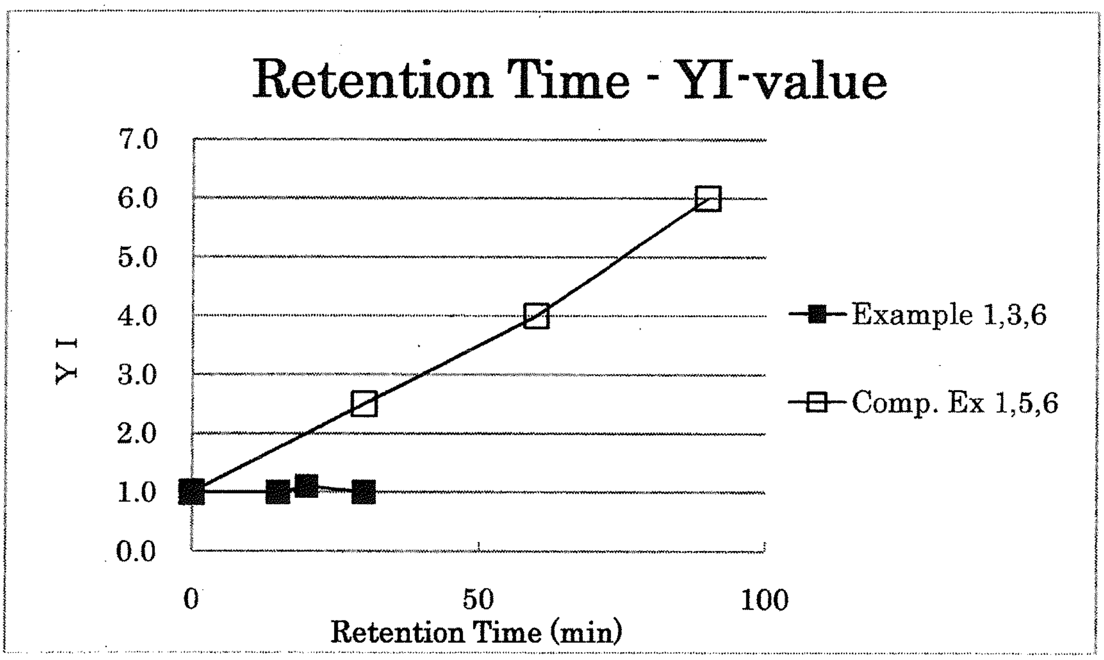
Retention Time - YI-value
7.0
6.0
5.0
4.0
3.0
2.0
1.0
0.0
Y I
0
50
100
Retention Time (min)
Example 1,3,6
Comp. Ex 1,5,6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S5019600 B
- JP H02153923 B
- US 5521275 A
- EP 0595608 A
- US 5696222 A
- JP 4112979 B
- JP 2008514754 W
- JP 4286914 B
- JP H0694501 B
- JP 2009102536 A
- JP 3317555 B
- JP 3301453 B
- JP 2810548 B
- JP 3271353 B
- WO 2011062220 A
- JP 2009161745 A
- JP 2010150540 A
- JP 2011006553 A